# EUROPEAN PATENT APPLICATION

(11) **EP 4 764 292 A1**
(43) Date of publication of application: **24.06.2026**
(21) Application number: 25223623.7
(22) Date of filing: 16.12.2025
(51) Int. Cl.: F16M 11/04, F16M 11/10, F16M 11/20, F16M 11/42, H04N 5/64

(54) **DISPLAY DEVICE**

(30) Priority: 20.12.2024 KR 20240192317; 05.02.2025 KR 20250014291
(71) Applicant: LG Electronics Inc., Yeongdeungpo-gu Seoul 07336 (KR)
(72) Inventor: CHOI, Wuram, 07796 Seoul (KR)
(74) Representative: Vossius & Partner Patentanwälte Rechtsanwälte mbB

(57) **Abstract**

A display device (1) comprising: a display (10) which displays an image on a front surface; a connector (40) which is positioned at a rear of the display (10), and to which the display (10) is rotatably coupled; an arm (50) to which the connector (40) is coupled; a pole (30) which is elongated, and to which the arm (50) is coupled; and a base (20) which supports the pole (30), wherein the display device (1) comprises a connector coupler (200) which adjusts the display (10) to be selectively separated from the connector (40) according to rotation of the display (10).

## Description

### TECHNICAL FIELD

This disclosure relates to a display device.

### BACKGROUND

As the information society develops, the demand for display devices is also increasing in various forms, and in response to this, various display devices such as Liquid Crystal Display Device (LCD), Plasma Display Panel (PDP), Electro luminescent Display (ELD), Vacuum Fluorescent Display (VFD), and Organic Light Emitting Diode (OLED) have been studied and used recently.

Among these, the LCD panel has a TFT substrate and a color substrate that are opposite to each other with a liquid crystal layer interposed therebetween, and may display images by using light provided from a backlight unit. In addition, an OLED panel may display images by depositing an organic layer that can emit light naturally on a substrate on which a transparent electrode is formed.

Recently, much research has been conducted on a structure that can freely adjust the angle or position of a display.

### SUMMARY

The disclosure has been made in view of the above problems, and may provide a display device having a stand for supporting a display.

The disclosure may further provide a display device capable of freely adjusting the angle or height of a display.

The disclosure may further provide a display device capable of improving durability for repeated operations of freely adjusting the angle or height of a display.

The disclosure may further provide a display device capable of attaching a display to a stand or detaching the display from the stand.

The disclosure may further provide a connection structure between a display and a stand.

The disclosure may further provide a mechanism for selectively coupling a display and a stand.

The disclosure may further provide a mechanism that restrains the separation of a display from a stand in response to rotation of the display.

The disclosure may further provide a mechanism that prevents a display from falling while separating the display from a stand.

In accordance with an aspect of the present disclosure, a display device includes: a display which displays an image on a front surface; a connector which is positioned at a rear of the display, and to which the display is rotatably coupled; an arm to which the connector is coupled; a pole which is elongated, and to which the arm is coupled; and a base which supports the pole, in which the display device includes a connector coupler which adjusts the display to be selectively separated from the connector according to rotation of the display.

### BRIEF DESCRIPTION OF THE DRAWINGS

The above and other objects, features and advantages of the present disclosure will be more apparent from the following detailed description in conjunction with the accompanying drawings, in which:

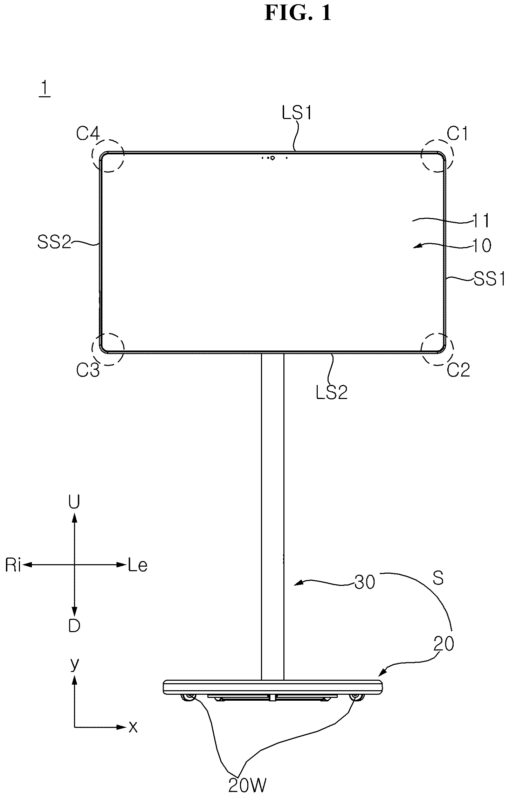

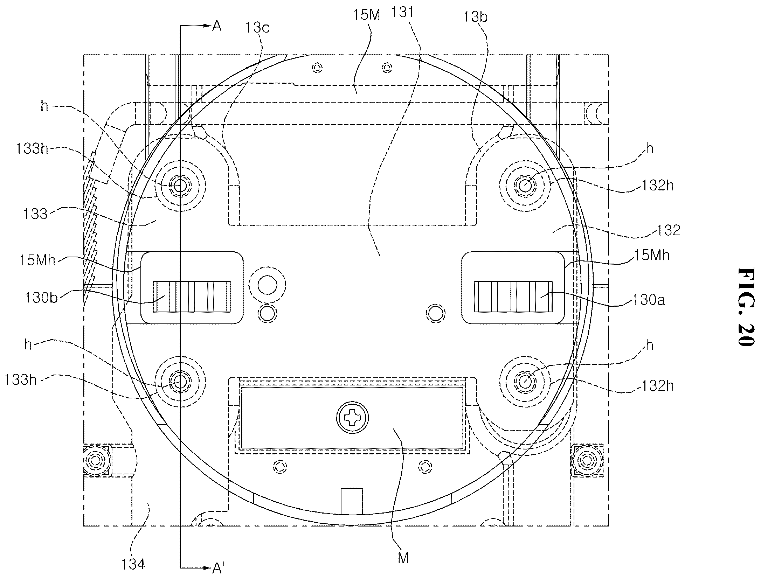

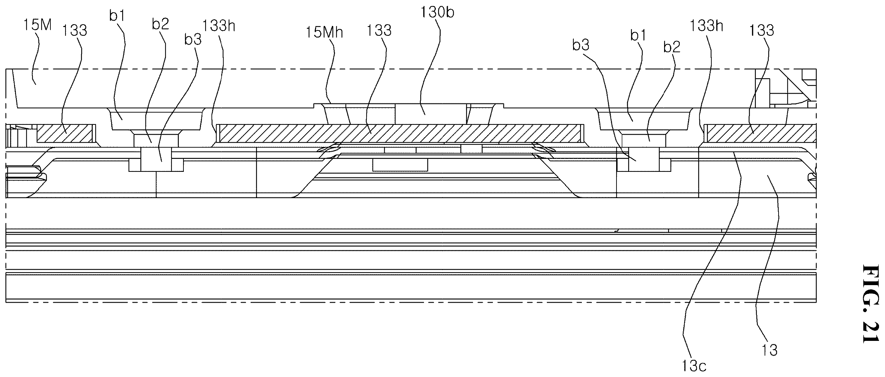

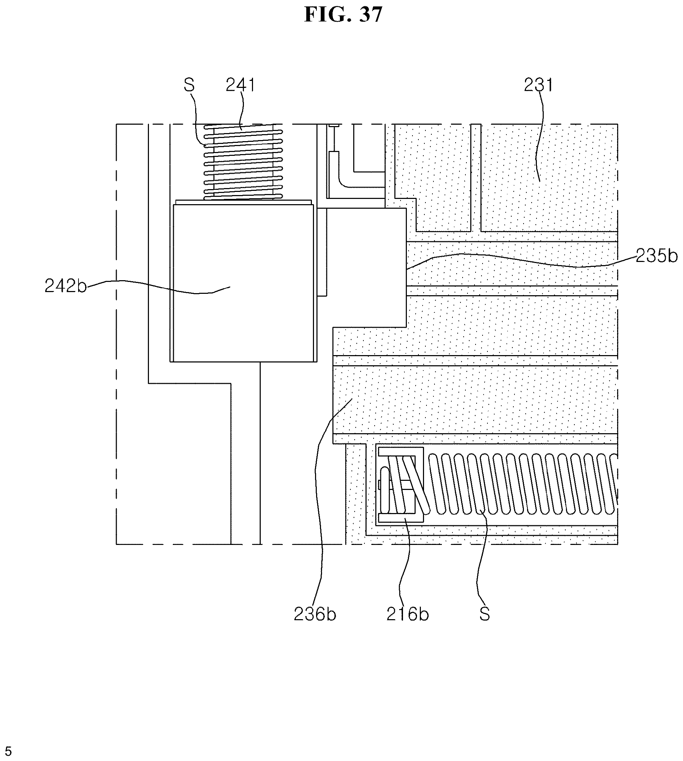

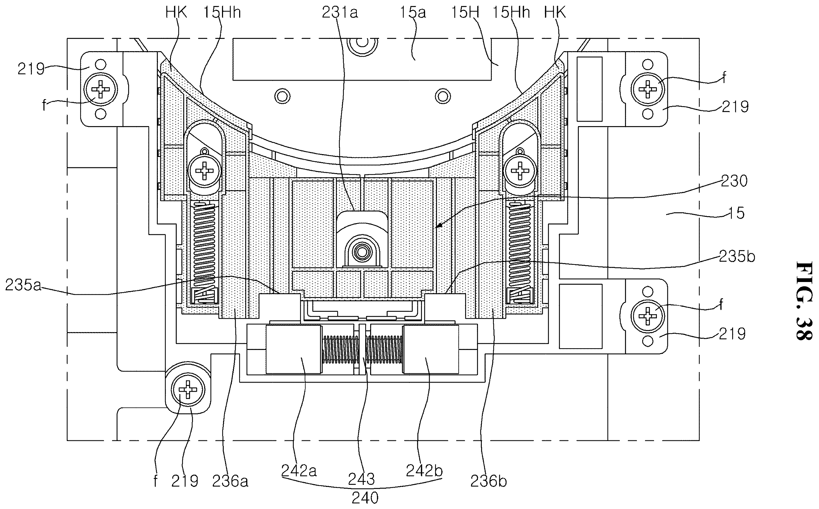

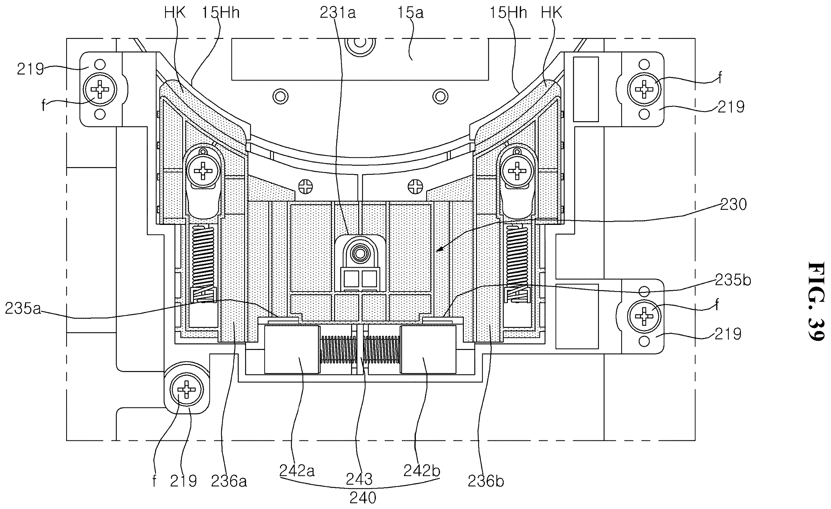

FIGS. 1 to 40 are drawings illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

When an element is referred to as being "coupled," "fixed," "mounted," "connected," "linked," etc. to another element, there may be intervening elements present. When an element is referred to as being "directly coupled," "directly fixed," "directly mounted," "directly connected," "directly linked" etc. to another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up U, down D, left Le, right Ri, front F, and rear R shown in the drawings are only for the convenience of explanation, and the technical concepts disclosed in this specification are not limited thereby.

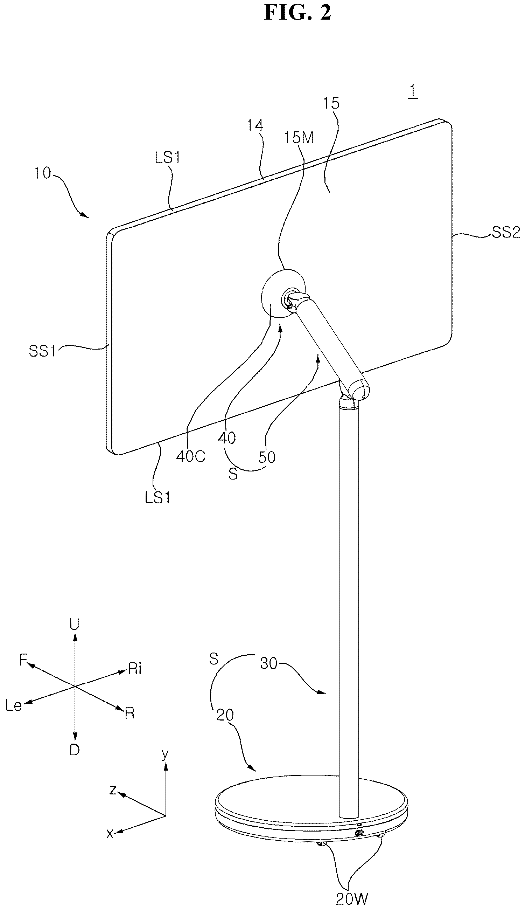

Referring to FIGS. 1 and 2, a display device 1 may include a display 10. The display 10 may include a display panel 11 that displays an image. The front surface of the display panel 11 may display an image. The display 10 may be referred to as a display unit 10 or a display head 10.

The display 10 may include a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of explanation, it is illustrated that the lengths of the first and second long sides LS1 and LS2 are longer than the lengths of the first and second short sides SS1 and SS2, but it may be possible that the lengths of the first and second long sides LS1 and LS2 are approximately the same as the lengths of the first and second short sides SS1 and SS2.

The direction parallel to the short sides SS1, SS2 of the display 10 may be referred to as an up-down direction. The direction parallel to the long sides LS1, LS2 of the display 10 may be referred to as a left-right direction. The direction perpendicular to the short sides SS1, SS2 and long sides LS1, LS2 of the display 10 may be referred to as a front-rear direction.

The direction in which the display 10 displays an image may be referred to as a front (F, z), and the opposite direction may be referred to as a rear R. The first short side SS1 side may be referred to as a left (Le, x). The second short side SS2 side may be referred to as a right Ri. The first long side LS1 side may be referred to as an upper side (U, y). The second long side LS2 side may be referred to as a lower side D.

The first long side LS1, the second long side LS2, the first short side SS1, and the second short side SS2 may be referred to as an edge of the display 10. The point where the first long side LS1, the second long side LS2, the first short side SS1, and the second short side SS2 meet each other may be referred to as a corner. The point where the first long side LS1 and the first short side SS1 meet may be referred to as a first corner C1. The point where the first short side SS1 and the second long side LS2 meet may be referred to as a second corner C2. The point where the second long side LS2 and the second short side SS2 meet may be referred to as a third corner C3. The point where the second short side SS2 and the first long side LS1 meet may be referred to as a fourth corner C4.

A stand S may support the display 10. The stand S of the display device 1 may be placed on the ground, and the display 10 of the display device 1 may be separated from the ground by the stand S. The stand S may include a base 20, a pole 30, pole, a connector 40, and a support arm 50.

The base 20 may be placed on the ground. The base 20 may be round or angular. A plurality of wheels 20W may be mounted on the base 20. The base 20 may be referred to as a moving base 20.

The pole 30 may extend from the base 20. The length direction of the pole 30 may be parallel to a vertical direction. The lower end of the pole 30 may be adjacent to the perimeter of the base 20 to be coupled to the base 20.

The support arm 50 may extend in a direction intersecting with the pole 30. The support arm 50 may be adjacent to the upper end of the pole 30 to be coupled to the pole 30. The connector 40 may be positioned between the display 10 and the support arm 50, and may be coupled to the display 10 and the support arm 50.

Accordingly, the display 10 may be supported by the stand S, and may be positioned away from the ground on which the base 20 is placed.

Meanwhile, a battery (not shown) may be embedded in at least one of the base 20, the pole 30, the support arm 50, and the display 10. The display device 1 may be driven by receiving power from the battery.

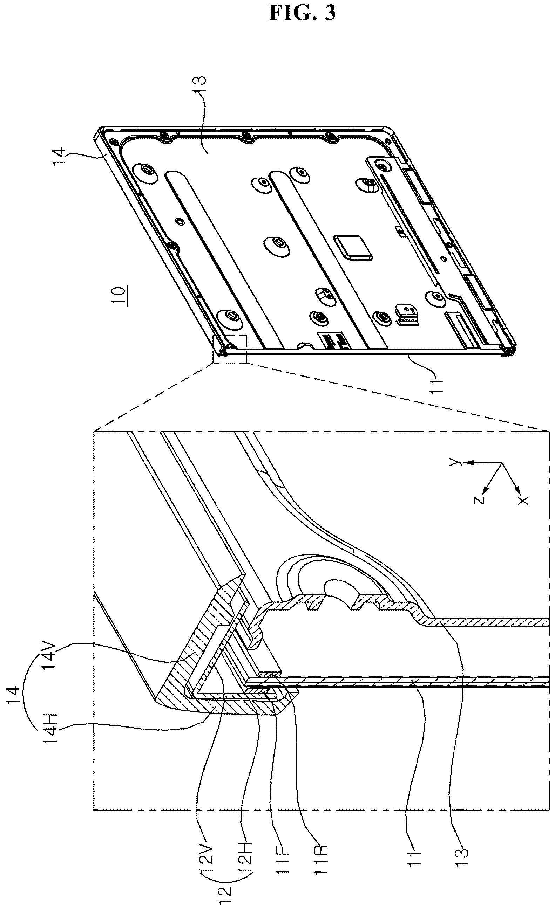

Referring to FIG. 3, the display 10 may include a display panel 11, a middle cabinet 12, a frame 13, a side frame 14, and a back cover 15.

The display panel 11 may form the front surface of the display 10. For example, the display panel 11 may be a Liquid Crystal Display (LCD) panel, an Organic Light Emitting Diode (OLED) panel, or a Light Emitting Diode (LED) panel. The display panel 11 may output an image by dividing an image into a plurality of pixels and adjusting the color, brightness, and saturation for each pixel. The display panel 11 may be divided into an active area where an image is displayed and a de-active area where an image is not displayed. The display panel 11 may generate light corresponding to the color of red, green, or blue according to a control signal.

The middle cabinet 12 may extend along the edge of the display panel 11. The horizontal portion 12H may be positioned in front of the display panel 11. The vertical portion 12V may intersect with the horizontal portion 12H, and cover the side surface of the display panel 11. The middle cabinet 12 may be omitted. A front pad 11F may be positioned between the horizontal portion 12H and the display panel 11, and may be coupled to the horizontal portion 12H. A rear pad 11R may be opposite to the front pad 11F with respect to the display panel 11.

The frame 13 may be positioned at the rear of the display panel 11. Electronic components such as a Printed Circuit Board (PCB) may be mounted on the frame 13. For example, a power supply board, a timing controller board, and a main board may be coupled to the rear of the frame 13.

The side frame 14 may extend along the edge of the frame 13. The side frame 14 may form the edge of the display 10. The horizontal portion 14H may be positioned at the front of the horizontal portion 12H of the middle cabinet 12. The vertical portion 14V may cover the vertical portion 12V of the middle cabinet 12.

The back cover 15 (see FIG. 2) may form the rear surface of the display 10. The back cover 15 may cover the rear of the frame 13, and may be coupled to the frame 13.

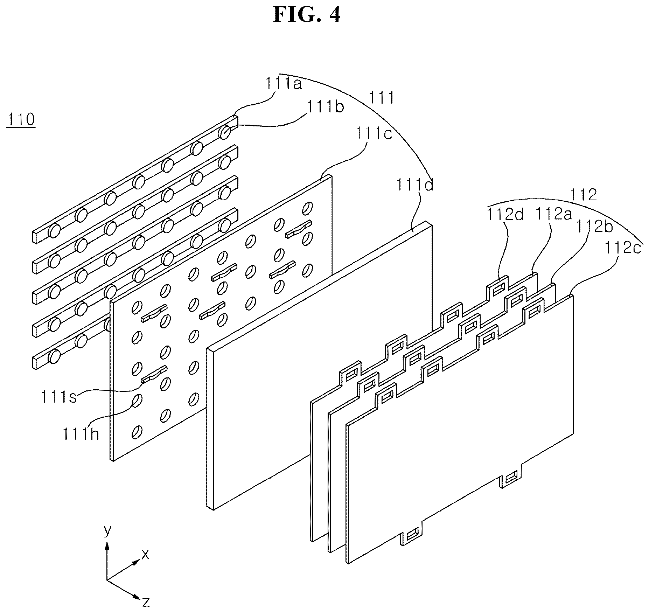

Referring to FIGS. 3 and 4, a backlight unit 110 may be positioned between the display panel 11 and the frame 13, and may be coupled to the frame 13. The display panel 11 may be referred to as an LCD panel 11. The backlight unit 110 may include an optical layer 111 and an optical sheet 112.

The optical layer 111 may include a substrate 111a, at least one light source 111b such as an Light Emitting Diode (LED), a reflective sheet 111c, and a diffusion plate 111d. The reflective sheet 111c may have a hole 111h in which a light source 111b is positioned. The diffusion plate 111d may be positioned in front of the reflective sheet 111c. A spacer 111s may support the rear surface of the diffusion plate 111d at between the reflective sheet 111c and the diffusion plate 111d.

The optical sheet 112 may be positioned in front of the diffusion plate 111d. The optical sheet 112 may include at least one of a diffusion sheet or a prism sheet. For example, the optical sheet 112 may be composed of a plurality of layers 112a, 112b, 112c. A coupling portion 112d of the optical sheet 112 may be coupled to the frame 13.

Accordingly, the light of the light source 111b may be provided to the display panel 11 through the diffusion plate 111d and the optical sheet 112. Meanwhile, the display panel 11 of the present disclosure may be an OLED panel that does not require the aforementioned backlight unit 110 or may be another type of panel.

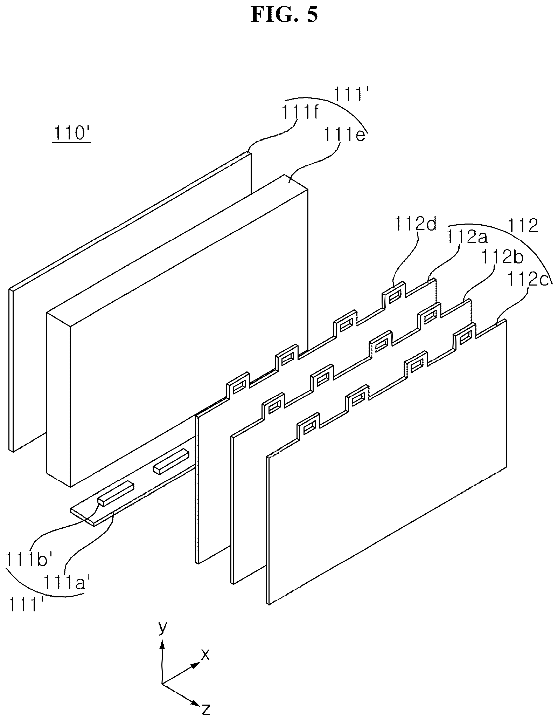

Referring to FIGS. 3 and 5, a backlight unit 110' may be positioned between the display panel 11 and the frame 13, and may be coupled to the frame 13. The display panel 11 may be referred to as an LCD panel 11. The backlight unit 110' may include an optical layer 111' and the optical sheet 112.

The optical layer 111' may include a substrate 111a', at least one light source 111b' such as an Light Emitting Diode (LED), a reflective sheet 111f, and a light guide plate 111e. The light guide plate 111e may be positioned between the frame 13 and the optical sheet 112, and may be supported by the frame 13. The reflective sheet 111f may be positioned between the frame 13 and the light guide plate 111e, and may be supported by the frame 13.

Accordingly, light from the light source 111b' may be provided to the display panel 11 through the light guide plate 111e and the optical sheet 112. Meanwhile, the display panel 11 of the present disclosure may be an OLED panel that does not require the aforementioned backlight unit 110' or may be another type of panel.

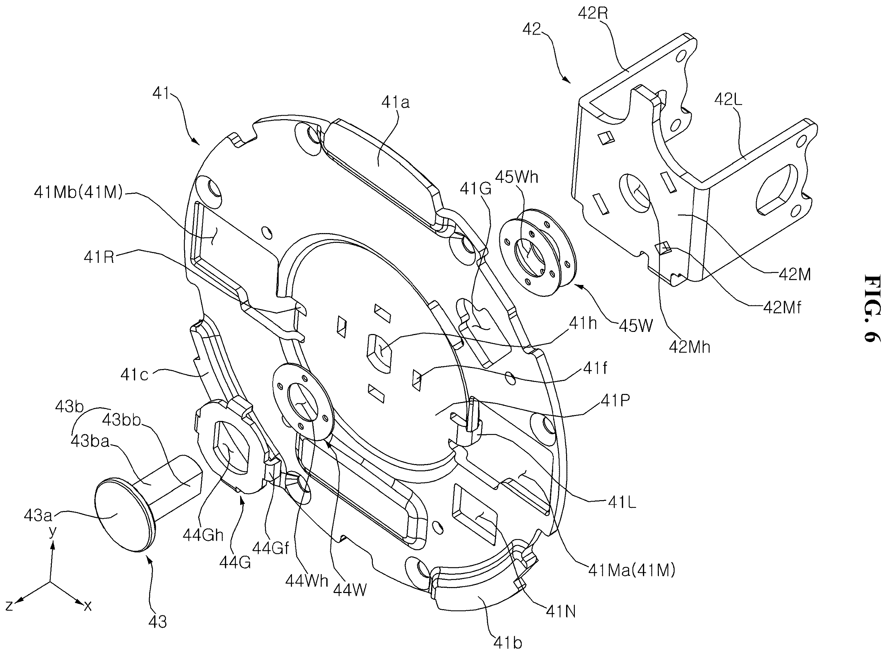

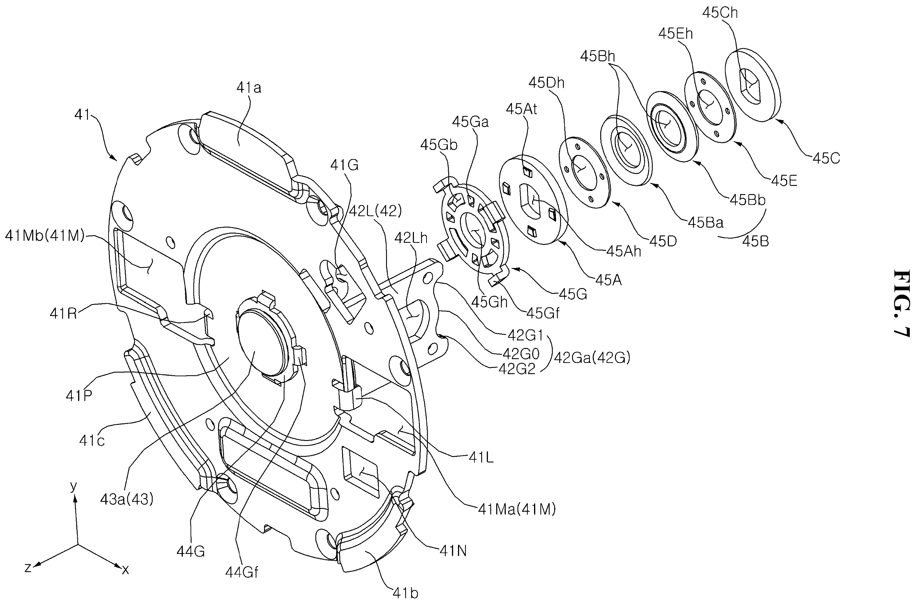

Referring to FIGS. 6 and 7, a front bracket 41 may have an overall circular shape. The front bracket 41 may face the back cover 15 (see FIG. 2) of the display 10. The front bracket 41 may be parallel to the rear surface of the back cover 15. The front bracket 41 may be referred to as a first bracket 41.

A plurality of coupling portions 41a, 41b, 41c may be formed at the edge of the front bracket 41. The plurality of coupling portions 41a, 41b, 41c may be recessed in a forward direction from the rear surface of the front bracket 41. The plurality of coupling portions 41a, 41b, 41c may form a step that is raised in a forward direction from the front surface of the front bracket 41. The coupling portions 41a, 41b, 41c may be referred to as recessed portions 41a, 41b, 41c, protruding portions 41a, 41b, 41c, or stepped portions 41a, 41b, 41c. A first coupling portion 41a may be positioned at the center of the upper portion of the front bracket 41. A second coupling portion 41b may be positioned at the left portion of the lower portion of the front bracket 41. A third coupling portion 41c may be positioned at the right portion of the lower portion of the front bracket 41. For example, the angle between the first to third coupling portions 41a, 41b, 41c may be 120 degrees, with respect to the center of the front bracket 41.

A pivot shaft 43 may extend in a direction intersecting with the front bracket 41. The pivot shaft 43 may be referred to as a first shaft 43. The diameter of the head 43a of the pivot shaft 43 may be larger than the diameter of a body 43b. The side surface of the body 43b may include a curved surface 43ba and a flat surface 43bb. The flat surface 43bb may be formed by cutting out a portion of the side surface of the body 43b. A pair of flat surfaces 43bb may be positioned opposite to each other. A hole 41h may be formed at the center of the front bracket 41. The shape of the hole 41h may be the same as the shape of the cross section of the body 43b of the pivot shaft 43. The pivot shaft 43 may penetrate the hole 41h. The pivot shaft 43 and the front bracket 41 may rotate together with respect to the shaft direction of the pivot shaft 43.

A front grab 44G may be positioned between the head 43a of the pivot shaft 43 and the front of the front bracket 41. A hole 44Gh of the front grab 44G may be aligned with the hole 41h of the front bracket 41, and may have the same shape as the hole 41h. The body 43b of the pivot shaft 43 may penetrate the holes 44Gh, 41h. Protrusions 44Gf may protrude from the front grab 44G toward the front bracket 41, and may be inserted and fixed into the grooves 41f or the holes 41f of the front bracket 41. The protrusions 44Gf may be spaced apart from each other at 90 degree intervals. At least one washer 44W may be positioned between the front grab 44G and the front bracket 41, and may have a circular hole 44Wh. The body 43b of the pivot shaft 43 may penetrate the hole 44Wh of the washer 44W. Meanwhile, a portion of the front bracket 41 where the holes 41h, 41f are formed may be referred to as a pressed portion 41P. Meanwhile, at least one hole 41M, 41N, 41G may be formed outside the pressed portion 41P.

A rear bracket 42 may be positioned at the rear of the front bracket 41. The rear bracket 42 may be referred to as a second bracket 42. The rear bracket 42 may have an overall U shape. The rear bracket 42 may include a mount 42M, a first wing 42L, and a second wing 42R.

The mount 42M may face the front bracket 41. The circular hole 42Mh of the mount 42M may be aligned with the hole 41h of the front bracket 41. The body 43b of the pivot shaft 43 may penetrate the hole 42Mh of the mount 42M, and may rotate relative to the hole 42Mh. In other words, even if the pivot shaft 43 rotates, the rear bracket 42 may not rotate. At least one washer 45W may be positioned between the front bracket 41 and the mount 42M of the rear bracket 42, and may have a circular hole 45Wh. The body 43b of the pivot shaft 43 may penetrate the hole 45Wh of the washer 45W.

The first wing 42L may extend in a rearward direction from one side (left side) of the mount 42M. The first wing 42L may form the left surface of the rear bracket 42. The first wing 42L may be referred to as a left wing 42L.

The second wing 42R may extend in a rearward direction from the other side (right side) of the mount 42M. The second wing 42R may form the right surface of the rear bracket 42. The second wing 42R may be referred to as a right wing 42R.

The following members 45G, 45A, 45B, 45C, 45D, 45E may be positioned between the first wing 42L and the second wing 42R, and may be coupled to the mount 42M.

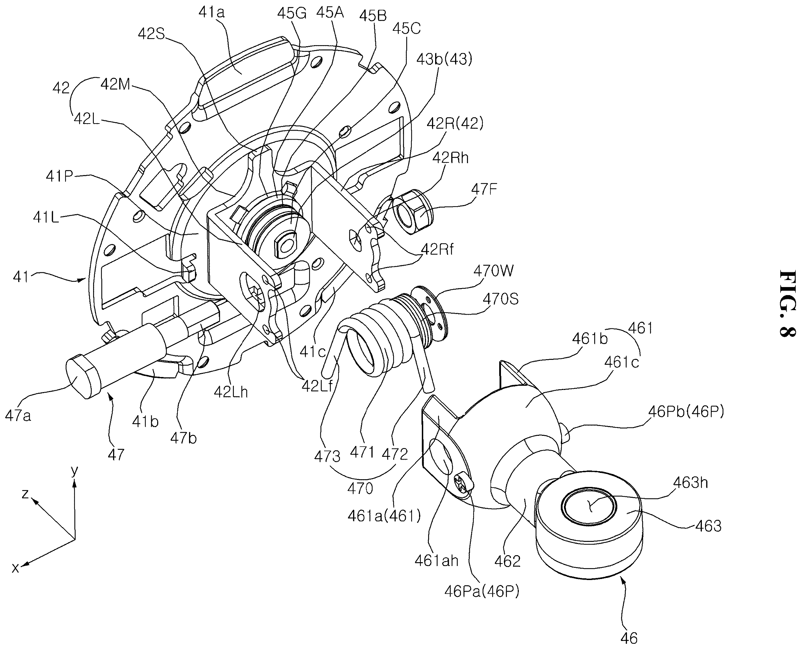

Referring to FIGS. 7 and 8, a rear grab 45G may be positioned at the rear of the mount 42M. The protrusions 45Gf may protrude from the rear grab 45G toward the mount 42M, and may be inserted and fixed into the grooves 42Mf or holes 42Mf (see FIG. 6) of the mount 42M. The protrusions 45Gf may be spaced apart from each other at 90-degree intervals. The circular hole 45Gh of the rear grab 45G may be aligned with the hole 42Mh of the mount 42M. The body 43b of the pivot shaft 43 may penetrate the holes 42Mh, 45Gh, and may rotate relative to the holes 42Mh, 45Gh. In other words, even if the pivot shaft 43 rotates, the rear bracket 42 and the rear grab 45G may not rotate.

A plurality of fixing holes 45Ga and a plurality of slots 45Gb may be formed around the hole 45Gh of the rear grab 45G. The fixing holes 45Ga and the slots 45Gb may be alternately arranged along the boundary of the hole 45Gh. The fixing holes 45Ga may be spaced apart from each other at 90-degree intervals, and the slots 45Gb may be spaced apart from each other at 90-degree intervals. In the arrangement direction of the fixing holes 45Ga and the slots 45Gb, the length of the slot 45Gb may be greater than the length of the fixing hole 45Ga.

A disc 45A may be positioned at the rear of the rear grab 45G, and may have a hole 45Ah through which the body 43b of the pivot shaft 43 passes. The shape of the hole 45Ah may be the same as the shape of the cross section of the body 43b, and the disc 45A may rotate together with the pivot shaft 43. A plurality of protrusions 45At may protrude toward the rear grab 45G from one surface (front surface) of the disk 45A facing the rear grab 45G, and may be spaced apart from each other in the circumferential direction of the disk 45A. The protrusions 45At may be spaced apart from each other at 90-degree intervals. The size of the protrusion 45At may be equal to or correspond to the size of the fixing hole 45Ga. When the protrusion 45At is inserted into the fixing hole 45Ga, the rotation of the disk 45A and the pivot shaft 43 may be restricted by the rear grab 45G. When the protrusion 45At is inserted into the slot 45Gb, the disk 45A and the pivot shaft 43 may rotate within the slot 45Gb.

A disc spring 45B may be positioned at the rear of the disc 45A, and may have a circular hole 45Bh through which the body 43b of the pivot shaft 43 passes. The disc spring 45B may be elastic, and may be convex in a forward direction or rearward direction. The disc spring 45B may generate an elastic force in the axial direction of the pivot shaft 43. For example, there may be a pair of disc springs 45B. A first disc spring 45Ba may be convex in a rearward direction, and a second disc spring 45Bb may be convex in a forward direction.

A cap 45C may be positioned at the rear of the disc spring 45B, and may have a hole 45Ch through which the body 43b of the pivot shaft 43 passes. The shape of the hole 45Ch may be the same as the shape of the cross section of the body 43b. The cap 45C may be fixed to the body 43b, and may press the disc spring 45B and the disc 45A toward the rear grab 45G. The cap 45C, such as a nut, may be screw-fastened to the body 43b. A first washer 45D may be positioned between the disc 45A and the disc spring 45B, and may have a circular hole 45Dh through which the body 43b of the pivot shaft 43 passes. A second washer 45E may be positioned between the disc spring 45B and the cap 45C, and may have a circular hole 45Eh through which the body 43b of the pivot shaft 43 passes.

Accordingly, the front bracket 41 may be rotated together with the pivot shaft 43, the front grab 44G, the disc 45A, and the cap 45C. The front bracket 41 may be rotated independently of the rear bracket 42, the rear grab 45G, the disc spring 45B, and the washers 44W, 45D, 45E. In other words, even if the front bracket 41 is rotated, the rear bracket 42, the rear grab 45G, the disc spring 45B, and the washers 44W, 45D, 45E may not be rotated.

The pivot shaft 43 may provide a pivot axis of the front bracket 41. The elastic force of the disc spring 45B allows the front bracket 41 to maintain the pivot angle of the front bracket 41 unless a force above a certain level is applied.

A first protrusion 41L may protrude in a rearward direction from the front bracket 41. A second protrusion 41R may protrude in a rearward direction from the front bracket 41. A stopper 42S may protrude from the upper side of the mount 42M, and may be positioned on the rotation trajectory of the first protrusion 41L and the second protrusion 41R. The stopper 42S may restrict the pivot of the front bracket 41 by interfering with the first protrusion 41L or the second protrusion 41R. The first protrusion 41L and the second protrusion 41R may be spaced apart from each other by 180 degrees with respect to the pivot axis of the front bracket 41, and the front bracket 41 is able to pivot within a range of +90 degrees to -90 degrees.

During the pivoting of the front bracket 41, a user may feel the fastening feeling according to the fastening of the protrusion 45At and the fixing hole 45Ga or the fastening of the protrusion 45At and the slot 45Gb. For example, when the protrusion 45At comes out of the slot 45Gb and is inserted into the fixing hole 45Ga, a user may sense that the front bracket 41 is positioned at an angle of 0 degrees, +90 degrees, or -90 degrees.

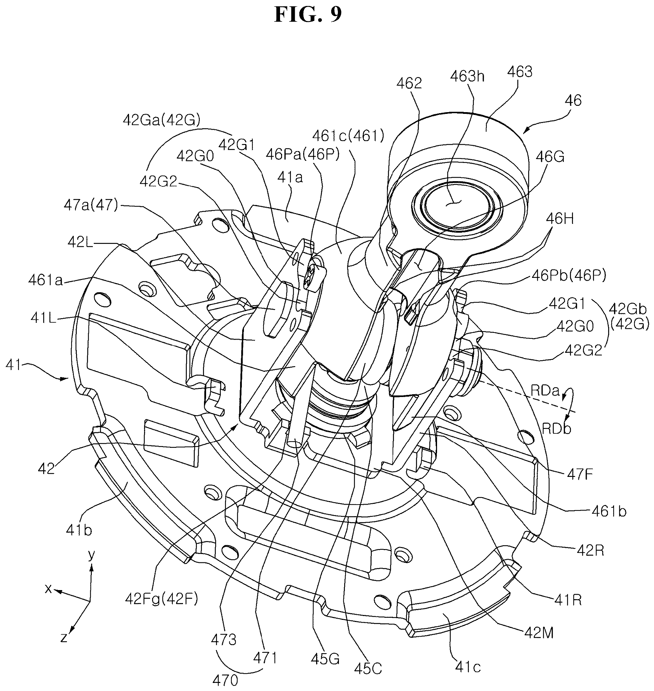

Referring to FIGS. 8 and 9, the holder 46 may be positioned at the rear of the mount 42M of the rear bracket 42. The holder 46 may be positioned between the wings 42L, 42R of the rear bracket 42. The holder 46 may be referred to as an ankle 46, a hand 46, or a grab 46. The holder 46 may include a front part 461, a middle part 462, and a rear part 463. The front part 461, the middle part 462, and the rear part 463 may be formed as one body.

The front part 461 may form a front portion of the holder 46. The front part 461 may be positioned between the wings 42L, 42R of the rear bracket 42. The front part 461 may include a first part 461a, a second part 461b, and a third part 461c. The third part 461c may have a hemispherical or bowl shape as a whole, and may be opened toward the mount 42M. The first part 461a may extend from the third part 461c toward the mount 42M, and may face the first wing 42L. The second part 461b may extend from the third part 461c toward the mount 42M, and may face the second wing 42R.

The middle part 462 may form the central portion of the holder 46. The middle part 462 may be positioned at the rear of the front part 461. The middle part 462 may extend in a rearward direction from the third part 461c of the front part 461. Meanwhile, the middle part 462 may be omitted. In this case, the rear part 463 may be directly coupled to the front part 461.

The rear part 463 may form the rear portion of the holder 46. The rear part 463 may be positioned at the rear of the middle part 462. The rear part 463 may extend in a rearward direction from the middle part 462. The rear part 463 may have a ring shape as a whole. The hole 463H may be formed by vertically penetrating the central portion of the rear part 463. The rear part 463 may be coupled to the support arm 50. The rear part 463 may rotate with respect to the support arm 50.

A tilt shaft 47 may extend in a direction intersecting with the wings 42L, 42R of the rear bracket 42. The tilt shaft 47 may penetrate the first wing 42L, the first part 461a, the second part 461b, and the second wing 42R. A head 47a of the tilt shaft 47 may form one end of the tilt shaft 47, and may be inserted and fixed into the hole 42Lh of the first wing 42L. A portion 47b of the tilt shaft 47 may form the other end of the tilt shaft 47, and may be inserted and fixed into the hole 42Rh of the second wing 42R. A fastening member 47F such as a nut may be screw-fastened to a portion 47b of the tilt shaft 47 protruding from the second wing 42R.

At this time, a first circular hole 461ah may be formed in the first part 461a, and a second circular hole may be formed in the second part 461b. The tilt shaft 47 may penetrate the first hole 461ah and the second hole. The tilt shaft 47 and brackets 41, 42 coupled thereto may rotate with respect to the holder 46.

An elastic member 470 may be positioned between the first part 461a and the second part 461b of the holder 46. The elastic member 470 may be wound multiple times around the outer circumferential surface of the tilt shaft 47, and may be elastic. The elastic member 470 may be a coil-shaped spring. A coil section 471 of the elastic member 470 may be a portion of the elastic member 470 wound around the outer circumferential surface of the tilt shaft 47. A support section 472 of the elastic member 470 may extend from one end of the coil section 471 to form one end of the elastic member 470, and may be supported by the inner side of the front part 461 of the holder 46. An engagement section 473 of the elastic member 470 may extend from the other end of the coil section 471 to form the other end of the elastic member 470, and may be supported by the rear bracket 42. A support portion 42F may protrude in a rearward direction from the lower side of the mount 42M of the rear bracket 42, and may be adjacent to the first wing 42L. The engagement section 473 may be engaged with a groove 42Fg of the support portion 42F.

A disc spring 470S may be positioned between the elastic member 470 and the second part 461b. The tilt shaft 47 may penetrate the disc spring 470S. The disc spring 470S may be convex in a direction toward the elastic member 470 or the second part 461b, and may be elastic. The disc spring 470S may generate an elastic force in the axial direction of the tilt shaft 47. A washer 470W may be positioned between the second part 461b and the second wing 42R, and may have a circular hole through which the tilt shaft 47 passes.

Accordingly, the front bracket 41 and the rear bracket 42 may be rotated together with the tilt shaft 47 and the fastening member 47F (see RDa, RDb of FIG. 9). The tilt shaft 47 may provide an axis of rotation of the brackets 41, 42 with respect to the holder 46. The tilt shaft 47 may provide a tilt axis of the brackets 41, 42. The tilt angle of the brackets 41, 42 can be maintained as long as a force exceeding a certain level is not applied to the brackets 41, 42 due to the elasticity of the disk spring 470S.

A pin 46P may be fixed to the first part 461a and/or the second part 461b. A first pin 46Pa may protrude from the outer surface of the first part 461a. A second pin 46Pb may protrude from the outer surface of the second part 461b.

A guide groove 42G may be formed in the first wing 42L and/or the second wing 42R. A first guide groove 42Ga may be formed from the rear end of the first wing 42L toward the inside of the first wing 42L. A second guide groove 42Gb may be formed from the rear end of the second wing 42R toward the inside of the second wing 42R. A first groove 42G1 of the guide groove 42G may be formed to draw an arc from a reference point 42G0 in a first rotation direction RDa. A second groove 42G2 of the guide groove 42G may be formed to draw an arc from the reference point 42G0 in a second rotation direction RDb opposite to the first rotation direction RDa.

Here, the tilt shaft 47 may rotate in the first rotation direction RDa or the second rotation direction RDb. While the tilt shaft 47 rotates in the first rotation direction RDa, the pin 46P may move relatively in the second groove 42G2. The rotation (tilting) of the tilt shaft 47 and the brackets 41, 42 coupled thereto may be restricted as the second groove 42G2 is engaged with the pin 46P. While the tilt shaft 47 rotates in the second rotation direction RDb, the pin 46P may move relatively in the first groove 42G1. The rotation (tilting) of the tilt shaft 47 and the brackets 41, 42 coupled thereto may be restricted as the first groove 42G1 is engaged with the pin 46P.

Accordingly, the brackets 41, 42 may be tilted up and down within a certain angle range. For example, the brackets 41, 42 may be tilted within a range of +25 degrees to -25 degrees.

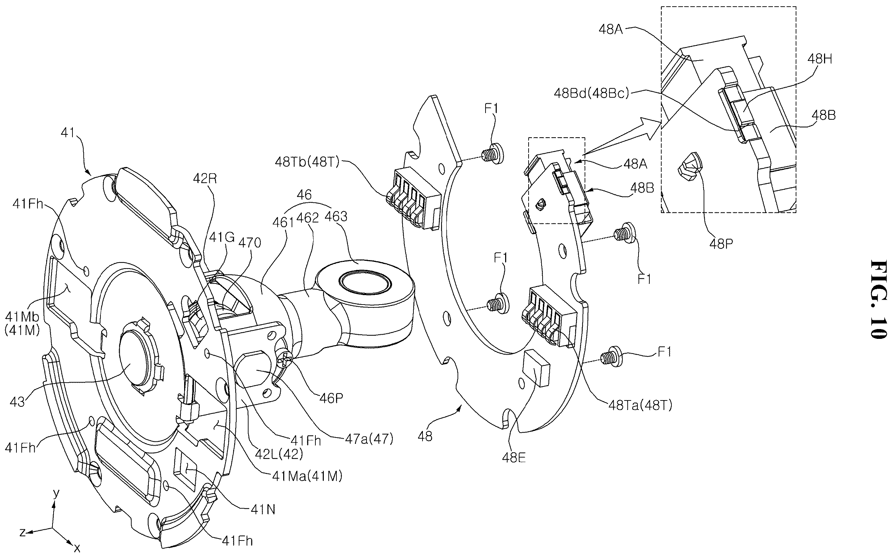

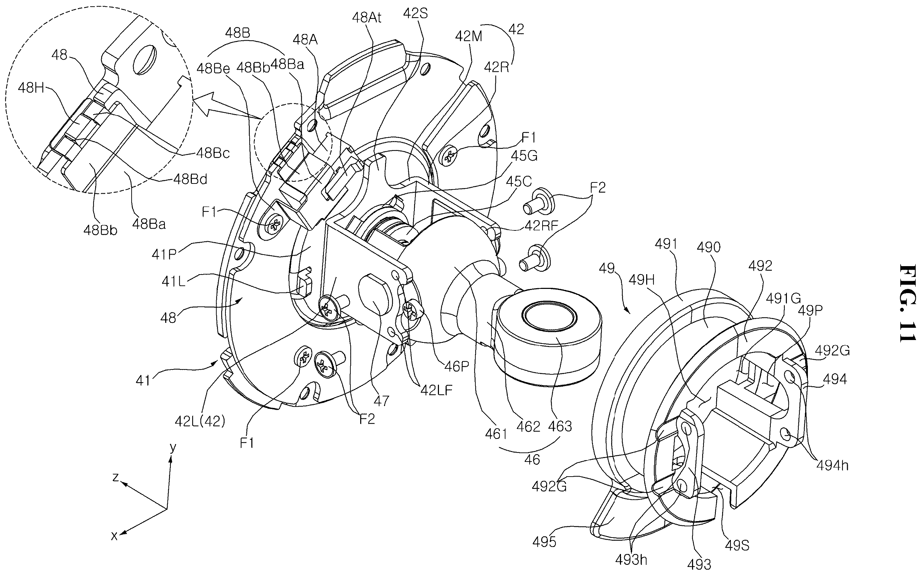

Referring to FIGS. 10 and 11, the substrate 48 may be positioned at the rear of the front bracket 41. The substrate 48 may be referred to as a Printed Circuit Board (PCB) or a board 48. The substrate 48 may have an overall open ring shape. The substrate 48 may have an overall C shape. The substrate 48 may be extended along the edge of the front bracket 41. The substrate 48 may be arranged along the edge of the front bracket 41, and may be positioned on the rear surface of the front bracket 41. A circular pressed portion 41P may be formed on the inside of the substrate 48.

A fastening member F1 may be coupled to the hole 41Fh of the front bracket 41 by penetrating the substrate 48. The fastening member F1 may be a screw. The fastening members F1 coupled to the holes 41Fh may be arranged along the substrate 48. Accordingly, the substrate 48 may be coupled to the rear of the front bracket 41.

A guide protrusion 48P may protrude from the front surface of the substrate 48. The guide protrusion 48P may be adjacent to one end of the substrate 48. The guide protrusion 48P may be inserted into a guide hole 41G of the front bracket 41. The guide protrusion 48P and the guide hole 41G may guide the coupling of the substrate 48 and the front bracket 41.

A terminal 48T may be formed on the front surface of the substrate 48. The terminal 48T may be a block-shaped pin coupled to the front surface of the substrate 48. The terminal 48T may be mounted on the front surface of the substrate 48, and may be electrically connected to the substrate 48. A first terminal 48Ta may protrude from the front surface of the substrate 48. A second terminal 48Tb may protrude from the front surface of the substrate 48. The first terminal 48Ta and the second terminal 48Tb may be spaced apart from each other. The first terminal 48Ta may be positioned relatively close to one end of the substrate 48, and the second terminal 48Tb may be positioned relatively close to the other end of the substrate 48. For example, with respect to the center of the circle of the substrate 48, the first terminal 48Ta and the second terminal 48Tb may be spaced apart from each other by 180 degrees.

A hole 41M may be formed in the front bracket 41. The terminal 48T may be inserted into the hole 41M. The first terminal 48Ta may penetrate a first hole 41Ma. The second terminal 48Tb may penetrate a second hole 41Mb. The terminal 48T may be exposed to the front of the front bracket 41.

An element 48E may be mounted on the front surface of the substrate 48. The element 48E may protrude from the front surface of the substrate 48. The element 48E may be inserted into an accommodating hole 41N of the front bracket 41. Accordingly, the element 48E may prevent the substrate 48 from being lifted from the rear surface of the front bracket 41.

A cable connector 48A may be electrically connected to the substrate 48. The cable connector 48A may have a terminal electrically connected to the substrate 48. The cable connector 48A may have an overall rectangular block shape. The cable connector 48A may be adjacent to one end of the substrate 48.

A bracket 48B may fix the cable connector 48A to the substrate 48. Specifically, the bracket 48B may include a body 48Ba and a leg 48Bb.

The body 48Ba may cover the cable connector 48A. The body 48Ba may be fixed to the cable connector 48A. For example, the cable connector 48A may be fixed to the body 48Ba via a clip 48At having a lever structure.

The leg 48Bb may extend from the body 48Ba, and may be positioned on the substrate 48. A portion 48Bc of the leg 48Bb may be bent to wrap around the edge of the substrate 48. A portion 48Bc of the leg 48Bb may be referred to as a clip 48Bc. A hole 48Bd may be formed in a portion 48Bc of the leg 48Bb. A protrusion 48H may protrude from a lateral side of the substrate 48, and may be inserted into the hole 48Bd to be engaged with the clip 48Bc. The leg 48Bb may be referred to as a first leg 48Bb. A second leg 48Be may extend from the body 48Ba, and may be positioned on the substrate 48. The fastening member F1 may be coupled to a hole 41Fh of the front bracket 41 by penetrating the second leg 48Be and the substrate 48.

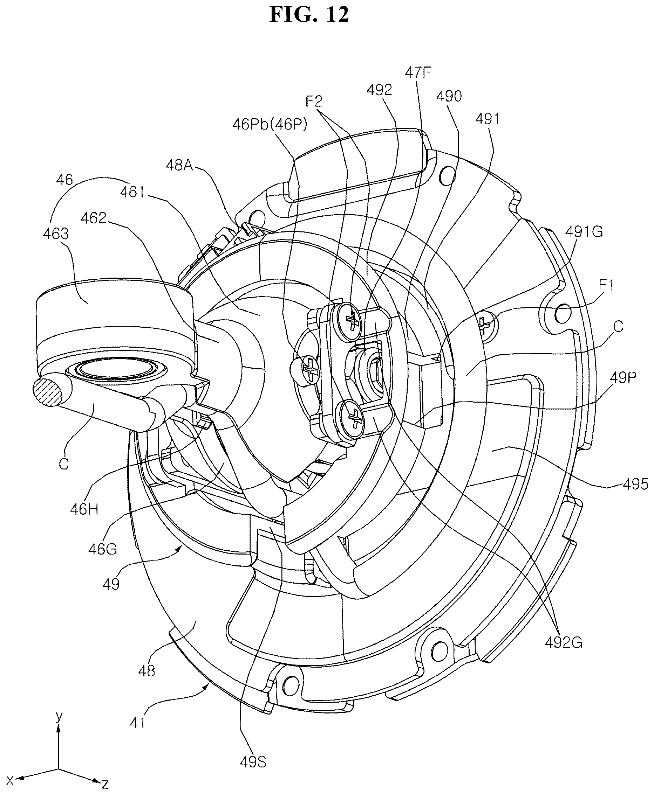

Referring to FIG. 11 and FIG. 12, the cable holder 49 may be positioned at the rear of the substrate 48. The cable holder 49 may surround the lateral side of the rear bracket 42. The wings 42L, 42R of the rear bracket 42 may be positioned in a hollow space 49H of the cable holder 49. The cable holder 49 may be referred to as a cable reel 49 or a cable wheel 49. The cable holder 49 may include a body 490, a first rim 491, and a second rim 492.

The body 490 may have a hollow cylinder shape. The internal space of the body 490 may form the hollow space 49H of the cable holder 49. The central axis (i.e., length direction axis) of the body 490 may be parallel to the pivot shaft 43 (see FIG. 10). The body 490 may be referred to as a cylinder 490.

A first rim 491 may be adjacent to one end of the body 490. The first rim 491 may protrude in a radial direction of the body 490 from the one end of the body 490. The first rim 491 may protrude from the outer circumferential surface of the body 490, and may extend along a circumferential direction of the body 490. The first rim 491 may be referred to as a front rim 491 or a first wall 491.

A second rim 492 may be adjacent to the other end of the body 490. The second rim 492 may protrude in a radial direction from the other end of the body 490. The second rim 492 may protrude from the outer circumferential surface of the body 490, and may extend along a circumferential direction of the body 490. The second rim 492 may be referred to as a rear rim 492 or a second wall 292.

A first coupling portion 493 may protrude in a rearward direction from the second rim 492. The first coupling portion 493 may face the first wing 42L of the rear bracket 42. A second fastening member F2 may penetrate the hole 493h of the first coupling portion 493 and be fastened to the hole 42Lf of the first wing 42L. The second fastening member F2 may be a screw. A groove 492G corresponding to the movement path of the head of the screw F2 may be formed on the rear surface of the second rim 492.

A second coupling portion 494 may protrude in a rearward direction from the second rim 492. The second coupling portion 494 may face the second wing 42R of the rear bracket 42. The second fastening member F2 may penetrate the hole 494h of the second coupling portion 494 and be fastened to the hole 42Rf of the second wing 42R. The second fastening member F2 may be a screw. The groove 492G corresponding to the movement path of the head of the screw F2 may be formed on the rear surface of the second rim 492.

Accordingly, the cable holder 49 may be coupled to the rear bracket 42. Meanwhile, the first coupling portion 493 may cover the first pin 46Pa but be spaced apart from the first pin 46Pa. The second coupling portion 494 may cover the second pin 46Pb but be spaced apart from the second pin 46Pb. The first rim 491 may be positioned to correspond to the pressed portion 41P. The protrusions 41L, 41R (see FIG. 9 may protrude in a rearward direction from the pressed portion 41P, and may not interfere with the first rim 491. An arc or annular groove 491G may be formed on the front surface of the first rim 491, and the protrusions 41L, 41R may move along the groove 491G while being spaced apart from the groove 491G.

An opening 49P may be formed on the side surface of the cable holder 49. The opening 49P may be referred to as a hole 49P. The fastening member 47F may be positioned in the opening 49P.

A slot 49S may be formed on the side surface of the cable holder 49. The slot 49S may be formed on the lower portion of the cable holder 49. The slot 49S may be formed by cutting out a portion of the second rim 492 and a portion of the body 490. Further, a portion of the first rim 491 may be cut-out to form a portion of the slot 49S.

A flange 495 may protrude in a radial direction from the edge of the first rim 491 toward the cable holder 49. The flange 495 may extend along the first rim 491. The flange 495 may be adjacent to the rear surface of the substrate 48. The flange 495 may be positioned on the rear surface of the substrate 48. A portion of the flange 495 may be formed on a portion of the first rim 491 where the slot 49S is formed. In other words, the slot 49S may be positioned between one end and the other end of the flange 495.

For example, the flange 495 may form a portion of a ring. The angle between one end and the other end of the flange 495 with respect to the central axis of the cable holder 49 may be 90 degrees or an obtuse angle. One end of the flange 495 may be positioned adjacent to the slot 49S, and the flange 495 may extend counterclockwise from the one end.

For another example, the flange 495 may form a ring.

A cable C may be positioned in the slot 49S. The cable C may be engaged with a portion of the cable holder 49 that forms the slot 49S. The cable C may be positioned between the first rim 491 and the second rim 492, and may be arranged along the body 490. The cable C may be routed counterclockwise along the body 490, and may be electrically connected to the cable connector 48A. The front bracket 41 and the substrate 48 may rotate with respect to the cable holder 49, and the rotation axis of the front bracket 41 and the substrate 48 may be aligned with the central axis of the pivot shaft 43. In response to the rotation of the substrate 48, the degree to which the cable C is wound around the cable holder 49 may be changed. For example, as the substrate 48 rotates counterclockwise around the pivot shaft 43, the cable C may be wound further around the cable holder 49. For example, as the substrate 48 rotates clockwise around the pivot shaft 43, the cable C may be unwound from the cable holder 49. For example, the cable C may be wound around the body 490 about 0.5 to 1.5 times.

The flange 495 may extend along the cable C routed to the body 490. The flange 495 may minimize the cable C from touching the substrate 48.

A cable groove 46G may be formed at the lower portion of the holder 46. The cable groove 46G may be formed at the lower portion of the front part 461 and the lower portion of the middle part 462. The protrusion 46H may protrude from the side wall of the cable groove 46G. One of the pair of protrusions 46H (see FIG. 9) may protrude from the first side wall of the cable groove 46G, and the other may protrude from the second side wall of the cable groove 46G opposite to the first side wall. The cable C may be inserted into the cable groove, 46G and engaged with the protrusion 46H.

Accordingly, the cable C may be routed to the holder 46 and the cable holder 49.

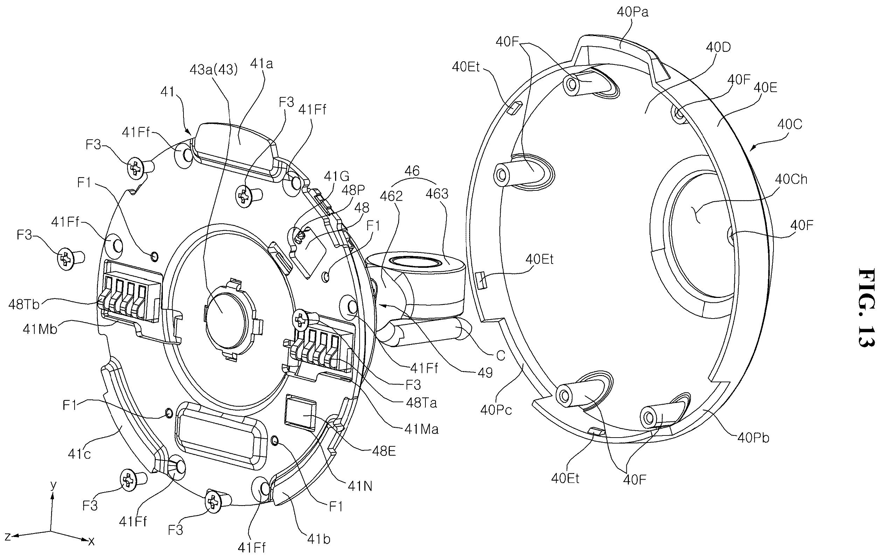

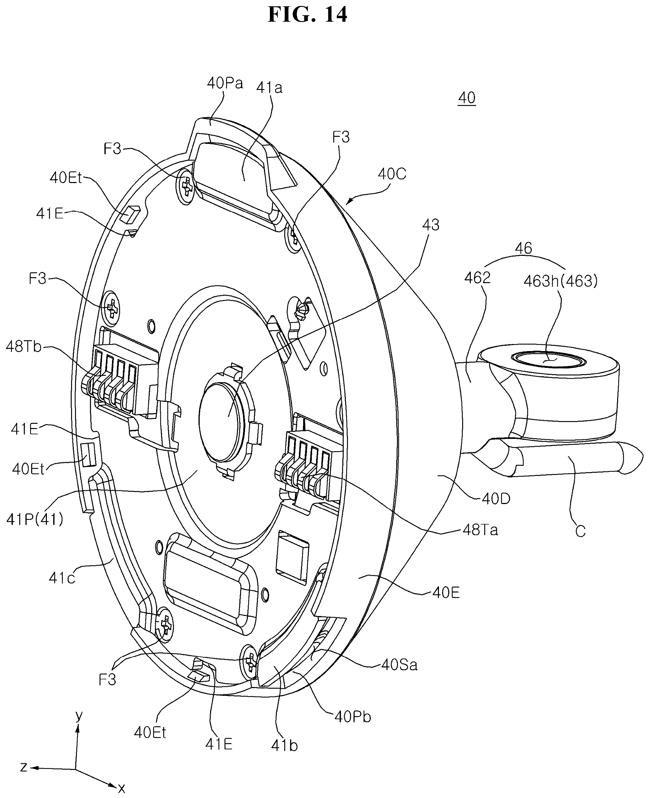

Referring to FIGS. 13 and 14, the cover 40C may be positioned at the rear of the cable holder 49. The cover 40C may have a bowl shape that is opened forward. A cover hole 40Ch may be formed in the cover 40C, and may be aligned with the holder 46. The holder 46 may penetrate the cover hole 40Ch. The middle part 462 and the rear part 463 of the holder 46 may be exposed to the rear of the cover 40C. The cover 40C may include a dome 40D and a side wall 40E. The cover 40C may be referred to as a rear cover 40C.

The dome 40D may be convex in a rearward direction. The cover hole 40Ch may be formed in the dome 40D. The dome 40D may cover the rear of the front bracket 41, a portion of the holder 46, the substrate 48, and the cable holder 49. The coupling portion 40F may protrude from the inside of the dome 40D toward the front bracket 41. The fastening member F3 may be coupled to the coupling portion 40F through the hole 41Ff of the front bracket 41. The fastening member F3 may be a screw. The holes 41Ff and the fastening members F3 may be arranged along the edge of the front bracket 41. The coupling portions 40F may be arranged along the edge of the cover 40C.

Accordingly, the cover 40C may be coupled to the front bracket 41. The cable C may penetrate the cover hole 40Ch.

The side wall 40E may protrude in a forward direction from the edge of the dome 40D. The side wall 40E may extend along the edge of the dome 40D. The side wall 40E may cover the edge of the front bracket 41. The protrusion 40Et may be formed on the inner surface of the side wall 40E. A plurality of protrusions 40Et may be arranged along the side wall 40E. The protrusion 40Et may be referred to as a hook 40Et. A groove 41E may be formed on the edge of the front bracket 41, and may be positioned to correspond to the protrusion 40Et.

A protrusion 40Pa may protrude from the outer surface of the side wall 40E. The protrusion 40Pa may be formed by pressing from the inner surface of the side wall 40E to the outer side. The first coupling portion 41a may be positioned to correspond to the protrusion 40Pa.

A first groove 40Pb may be formed from the front end of the side wall 40E to the inside of the side wall 40E. The second coupling portion 41b may be positioned to correspond to the first groove 40Pb. The second coupling portion 41b may be positioned in front of the first groove 40Pb. The first slot 40Sa may be formed between the second coupling portion 41b and the first groove 40Pb.

A second groove 40Pc may be formed from the front end of the side wall 40E to the inside of the side wall 40E. The third coupling portion 41c may be positioned to correspond to the second groove 40Pc. The third coupling portion 41c may be positioned in front of the second groove 40Pc. The second slot 40Sb may be formed between the third coupling portion 41c and the second groove 40Pc.

Referring to FIG. 14 and FIG. 2, the mount 15M may be recessed from the rear surface of the back cover 15, and the connector 40 may be inserted into the mount 15M. The protrusion 40Pa of the connector 40 may be inserted into a groove formed in the side wall of the mount 15M. The protrusions protruding from the side wall of the mount 15M may be inserted into the slots 40Sa, 40Sb of the connector 40.

Accordingly, the connector 40 may be coupled to the back cover 15 of the display 10. The display 10 may be rotated (pivoted) together with the front bracket 41 of the connector 40.

The terminals 48Ta, 48Tb of the connector 40 may be electrically connected to the terminals of the display 10. The terminals 48Ta, 48Tb may be electrically connected to the terminals of the display 10 through the holes formed in the bottom of the mount 15M. The terminals of the display 10 may be coupled to or formed on a Printed Circuit Board (PCB) inside the display 10.

For example, the substrate of the display 10 that is electrically connected to the terminals 48Ta, 48Tb may be electrically connected to a battery (not shown) of the display 10. The substrate of the display 10 may be referred to as a battery charger. In this case, the cable C may provide power to the battery of the display 10 through the substrate 48(see FIG. 12) and the substrate of the display 10. The cable C may be electrically connected to an external power source. The cable C may be routed along the support arm 50 (see FIG. 2) and the pole 30(see FIG. 2), and may be electrically connected to the base 20 (see FIG. 2). The power cable connected to the external power source may be detachably coupled to the base 20, and may be electrically connected to the cable C through the base 20.

In this case, when the display 10 is coupled to the connector 40, the battery of the display 10 may be charged. The display 10 separated from the connector 40 may be driven by the power of the battery of the display 10.

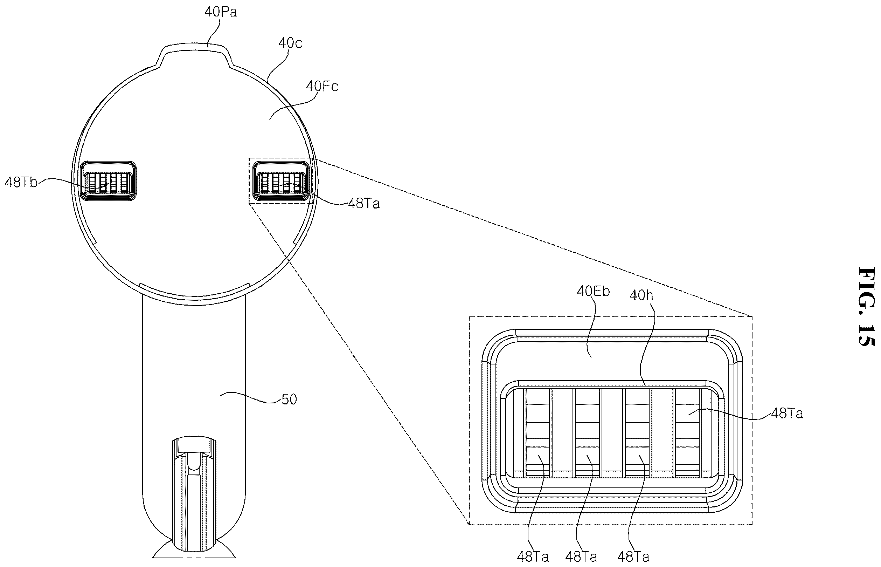

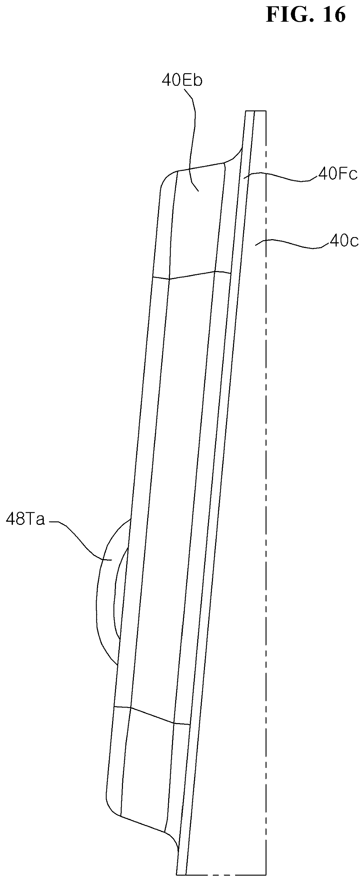

Referring to FIGS. 15 and 16, the front cover 40Fc may cover the front bracket 41. The front cover 40Fc may be coupled to the rear cover 40C. The front cover 40Fc may include a terminal barrier 40Eb. The terminal barrier 40Eb may protrude from the outer surface of the front cover 40Fc to form a raised step. For example, the terminal barrier 40Eb may have an overall rectangular shape. There may be a plurality of terminal barriers 40Eb. Each of the plurality of terminal barriers 40Eb may correspond to each of the plurality of terminals 48Ta. The terminal 48Ta may be referred to as a connection terminal 48Ta or a connection electrode 48Ta.

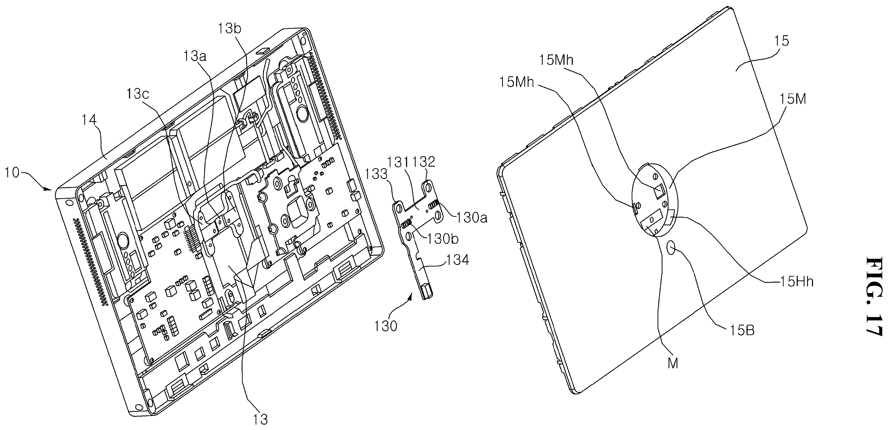

The front cover 40Fc may include a terminal hole 40h penetrating the terminal barrier 40Eb. The terminal hole 40h have an overall rectangular shape. The terminal hole 40h may expose the terminal 48Ta to the outside. The terminal 48Ta may protrude from the outer surface of the terminal barrier 40Eb through the terminal hole 40h. The size of the terminal barrier 40Eb may correspond to the size of a terminal hole 15Mh (see FIG. 17) of the back cover 15 (see FIG. 17). The terminal barrier 40Eb may be inserted into the terminal hole 15Mh (see FIG. 17) of the back cover 15(see FIG. 17) .

Accordingly, the terminal 48Ta, 48Tb exposed to the outside may be protected, and the matching or docking property of the display 10 (see FIG. 2) and the connector 40 (see FIG. 2) may be improved. In addition, the inflow of foreign substances may be prevented, thereby suppressing noise.

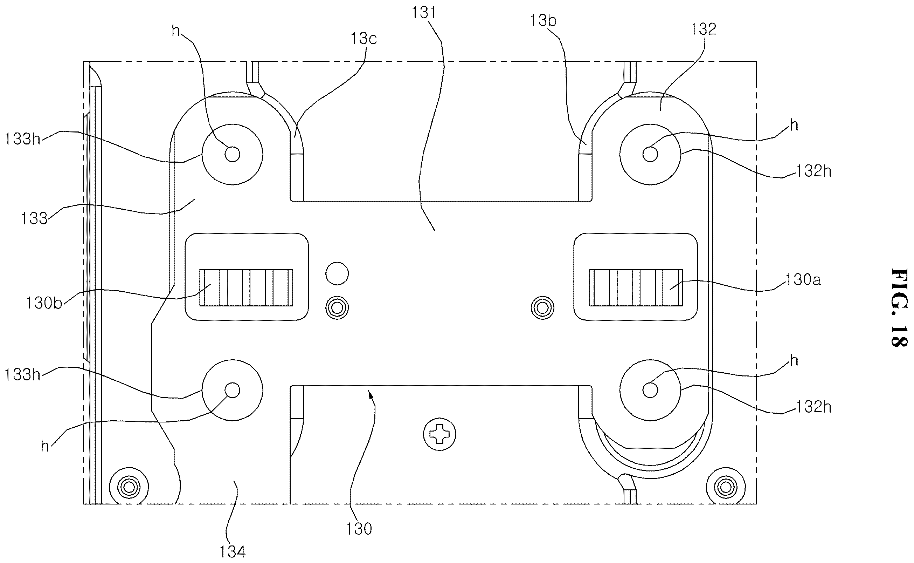

Referring to FIGS. 17 and 18, the frame 13 may include a substrate mount 13a, 13b, 13c. The substrate mount 13a, 13b, 13c may form a high step from the rear surface of the frame 13 to the rear of the frame 13. The substrate mount 13a, 13b, 13c may include a first part 13a, a second part 13b, and a third part 13c. For example, the substrate mount 13a, 13b, 13c may have an overall H shape.

The first part 13a of the substrate mount 13a, 13b, 13c may be extended in the left-right direction of the frame 13. The second part 13b may be extended in the up-down direction from one end of the first part 13a. The third part 13c may be extended in the up-down direction from the other end of the first part 13a. The third part 13c may be positioned opposite to the second part 13b with respect to the first part 13a. A fastening hole h may be formed on the upper and lower sides of the second part 13b. A fastening hole h may be formed on the upper and lower sides of the third part 13c. The fastening hole h may be a groove formed in the frame 13 or a through hole.

The head substrate 130 may correspond to the substrate mount 13a, 13b, 13c. The head substrate 130 may include a first substrate 131, a second substrate 132, and a third substrate 133. The first substrate 131 may be extended in the left-right direction. The first substrate 131 may be positioned on the first part 13a of the substrate mount 13a, 13b, 13c. The first part 13a of the substrate mount 13a, 13b, 13c may support the first substrate 131. The second substrate 132 may extend in the up-down direction from one side of the first substrate 131. The third substrate 133 may extend in the up-down direction from the other side of the first substrate 131. The third substrate 133 may be positioned opposite to the second substrate 132 with respect to the first substrate 131. The second substrate 132 may be positioned on the second part 13b of the substrate mount 13a, 13b, 13c, and the third substrate 133 may be positioned on the third part 13c of the substrate mount 13a, 13b, 13c. The second part 13b of the substrate mount 13a, 13b, 13c may support the second substrate 132, and the third part 13c may support the third substrate 133.

The second substrate 132 may include an upper hole 132h and a lower hole 132h that correspond to the fastening holes h formed in the second part 13b of the substrate mount 13a, 13b, 13c. The third substrate 133 may include an upper hole 133h and a lower hole 133h that correspond to the fastening holes h formed in the third part 13c of the substrate mount 13a, 13b, 13c. Each of the upper holes 132h, 133h and/or each of the lower holes 132h, 133h may be aligned with each of the fastening holes h of the substrate mount 13a, 13b, 13c. The upper hole 132h, 133h may be referred to as an upper substrate hole 132h, 133h or a first substrate hole 132h, 133h, and the lower hole 132h, 133h may be referred to as a lower substrate hole 132h, 133h or a second substrate hole 132h, 133h.

A first substrate terminal 130a may be mounted on the second substrate 132. The first substrate terminal 130a may be positioned between the upper hole 132h and the lower hole 132h. A second substrate terminal 130b may be mounted on the third substrate 133. The second substrate terminal 130b may be positioned between the upper hole 133h and the lower hole 133h. The substrate terminal 130a, 130b may be referred to as a head terminal 130a, 130b.

An extension substrate 134 may be connected to the third substrate 133. The extension substrate 134 may be extended downward from the third substrate 133. The extension substrate 134 may be replaced with a wire or a cable.

The back cover 15 may include a mount 15M. The mount 15M may be referred to as a connector mount 15M. The mount 15M may form a low step from the outer surface of the back cover 15. The mount 15M may include a terminal hole 15Mh. There may be a plurality of terminal holes 15Mh. The terminal holes 15Mh may be formed by penetrating the mount 15M. For example, a pair of terminal holes 15Mh may be aligned left and right. The pair of terminal holes 15Mh may be aligned with the first substrate terminal 130a and the second substrate terminal 130b.

The magnet M may be fixed to the mount 15M. The magnet M may be positioned on the lower side of the terminal hole 15Mh. A hook hole 15Hh may be formed on the side wall of the mount 15M. For example, the mount 15M may be circular. For example, the hook hole 15Hh may be formed on the side wall surface of the mount 15M. A button 15B may be coupled to the back cover 15. The button 15B may be positioned between the hook holes 15Hh.

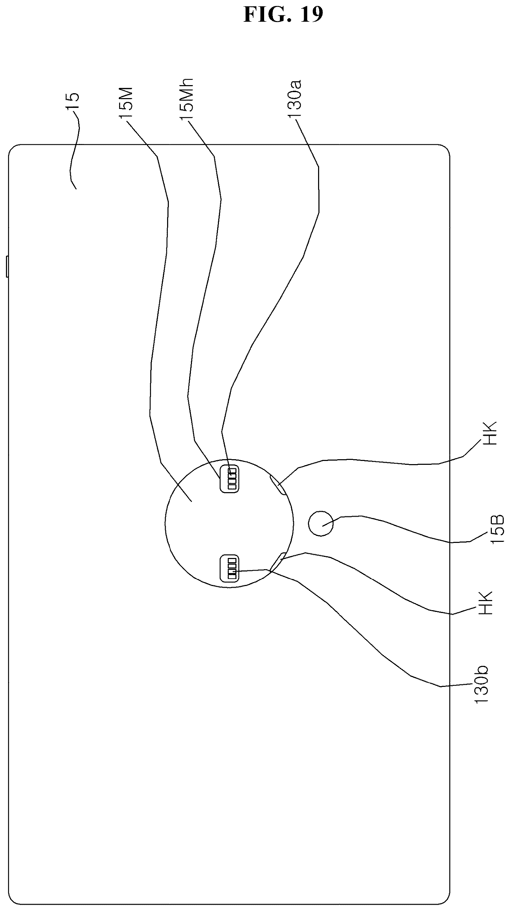

Referring to FIGS. 19 to 21, the first substrate terminal 130a and/or the second substrate terminal 130b may be exposed to the outside of the back cover 15 through the terminal holes 15Mh of the mount 15M of the back cover 15. The hooks HK may protrude or retract toward the hook holes 15Hh (see FIG. 17) of the mount 15M in conjunction with the button 15B provided on the back cover 15.

The magnet M may extend in the length direction of the first substrate 131 of the head substrate 130 (see FIG. 18), and may be positioned between the second substrate 132 and the third substrate 133.

The mount 15M of the back cover 15 may include a coupling boss b1, b2, b3. The coupling boss b1, b2, b3 may be formed on the inner surface of the mount 15M of the back cover 15. The coupling boss b1, b2, b3 may be formed in multistage. The coupling boss b1, b2, b3 may include a first boss b1, a second boss b2, and a third boss b3. The first boss b1 may be formed on the inner surface of the mount 15M. The second boss b2 may be formed on the first boss b1. The diameter of the second boss b2 may be smaller than the diameter of the first boss b1. The third boss b3 may be formed on the second boss b2. The diameter of the third boss b3 may be smaller than the diameter of the second boss b2.

Referring to FIG. 18 together, the coupling boss b1, b2, b3 may be inserted into the upper hole 133h and the lower hole 133h of the third substrate 133. The coupling boss b1, b2, b3 may be fixed to the third part 13c of the substrate mount 13a, 13b, 13c of the frame 13. The first boss b1 of the coupling boss b1, b2, b3 may be inserted into the upper hole 133h and/or the lower hole 133h of the third substrate 133. The second boss b2 of the coupling boss b1, b2, b3 may be supported by the third part 13c of the substrate mount 13a, 13b, 13c. The third boss b3 of the coupling boss b1, b2, b3 may be inserted into the third part 13c of the substrate mount 13a, 13b, 13c, or fixed to the third part 13c of the substrate mount 13a, 13b, 13c by a fastening member.

The head substrate 130 may be fixed to the substrate mount 13a, 13b, 13c of the frame 13, and may be positioned between the substrate mount 13a, 13b, 13c of the frame 13 and the mount 15M of the back cover 15. The substrate terminal 130a, 130b may be exposed to the outside of the back cover 15 through the terminal hole 15Mh of the mount 15M of the back cover 15.

Referring to FIG. 15 together, the terminal 48Ta, 48Tb exposed to the outside of the connector 40 through the terminal barrier 40Eb and the terminal hole 40h of the front cover 40Fc of the connector 40 may be connected to the substrate terminal 130a, 130b exposed to the outside of the back cover 15 through the terminal hole 15Mh of the back cover 15 when the connector 40 is coupled to the mount 15M of the back cover 15.

Accordingly, the connector 40 (see FIG. 2) and the display 10 (see FIG. 2) are electrically connected, and even if the display 10 (see FIG. 2) repeatedly pivots and rotates, the electrical connection between the connector 40 (see FIG. 2) and the display 10 (see FIG. 2) may be stably maintained. In addition, even if the terminals 48Ta, 48Tb, 130a, 130b (see FIG. 15) repeatedly come into contact or slip contact, the reliability and/or durability may be improved.

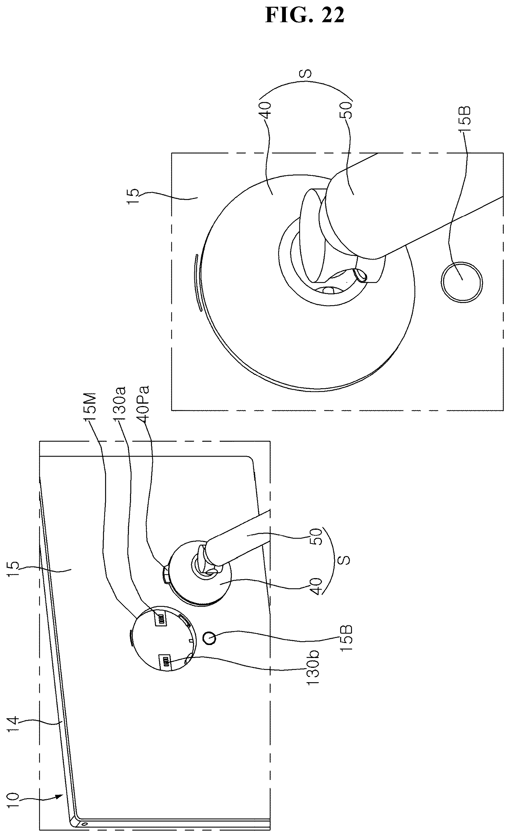

Referring to FIG. 22, the connector 40 to which the arm 50 is connected may be coupled or separated from the head 10. The connector 40 may be aligned with the mount 15M of the back cover 15 and coupled to or separated from the mount 15M. The button 15B may be a trigger of a mechanism by which the connector 40 is separated from the mount 15M of the back cover 15. For example, when the connector 40 is coupled to the mount 15M of the back cover 15, the button 15B may be operated manually. In another example, the connector 40 coupled to the mount 15M of the back cover 15 may be separated from the mount 15M of the back cover 15 by an operation of pressing the button 15B. The button 15B may be a mechanical button or an electronic button.

The operation of the button 15B may be based on the position or state of the head 10. For example, when the head 10 is in a landscape mode, if the button 15B is activated and the button 15B is pressed, the head 10 may be separated from the connector 40. For another example, when the head 10 is in a portrait mode, if the button 15B is deactivated and the button 15B is pressed, the head 10 may not be separated from the connector 40 and may maintain the connection.

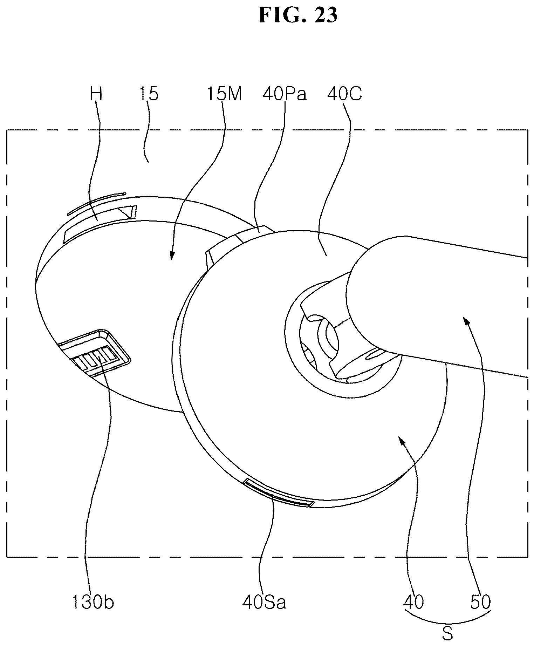

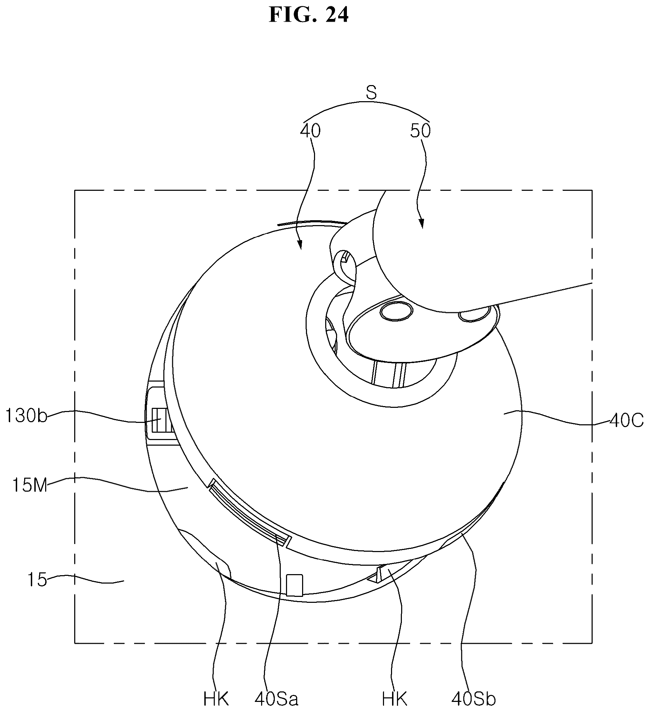

Referring to FIGS. 23 and 24, the mount 15M of the back cover 15 may form a low step from the rear surface of the back cover 15. The mount 15M may be formed integrally with the back cover 15 or may be formed separately. For example, the mount 15M may be a circular recessed portion, and the front cover 40Fc (see FIG. 15) and/or the rear cover 40C of the connector 40 may have an overall conical shape. The mount 15M of the back cover 15 may be coupled or fixed to the frame 13 (see FIG. 17). For example, the mount 15M of the back cover 15 may be fixed to the rear surface of the frame 13 (see FIG. 17) by a fastening member.

The connector 40 may be coupled while being inserted into the mount 15M of the back cover 15. The protrusion 40Pa of the rear cover 40C of the connector 40 and/or the coupling portion 41a of the front bracket 41 (see FIG. 13) may be inserted into a fixing hole H of the mount 15M of the back cover 15. Accordingly, the connector 40 may be fixed to the head 10 (see FIG. 22) .

When the connector 40 is inserted into the mount 15M, the coupling hook HK embedded in the back cover 15 may be inserted into the slot 40Sa, 40Sb of the connector 40. The coupling hook HK may reciprocally move from the inside to the outside of the back cover 15. There may be a plurality of coupling hooks HK. For example, for the stability of the coupling, the coupling hooks HK may be a pair. The connector 40 may be fixed to the head 10 (see FIG. 22), when the protrusion 40Pa and/or the coupling portion 41a (see FIG. 13) of the connector 40 is inserted into the fixing hole H of the back cover mount 15M, and when the coupling hook HK is inserted into the slot 40Sa, 40Sb of the connector 40.

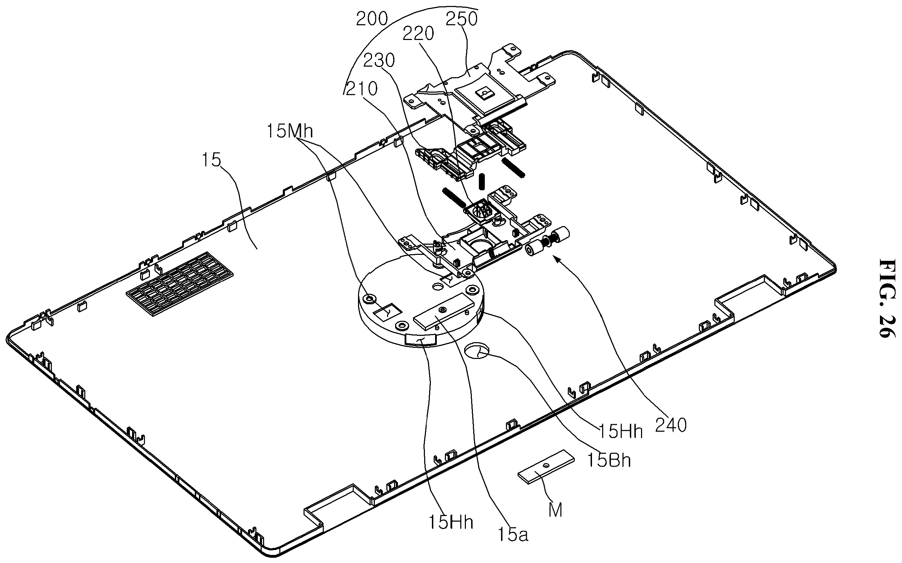

When the direction from the fixing hole H of the mount 15M of the back cover 15 toward the hooks HK is arranged in the up-down direction UD from the first long side LS1 of the display head 10 toward the second long side LS2, so that the display head 10 is in a landscape mode, the display head 10 may be stably temporarily fixed to or fixed to the connector 40. On the other hand, when the display head 10 is in portrait mode, if the hook HK comes out of the slot 40Sa, 40Sb, the protrusion 40Pa of the connector 40 may easily come out of the fixing hole H of the mount 15M, so that there may be a risk that the display head 10 is detached from the connector 40 and falls. A connector coupler 200 (see FIG. 26) may prevent damage to the display head 10 or injury to a user due to the falling of the display head 10 by blocking or permitting the operation of the hook HK depending on the pivot state of the display head 10.

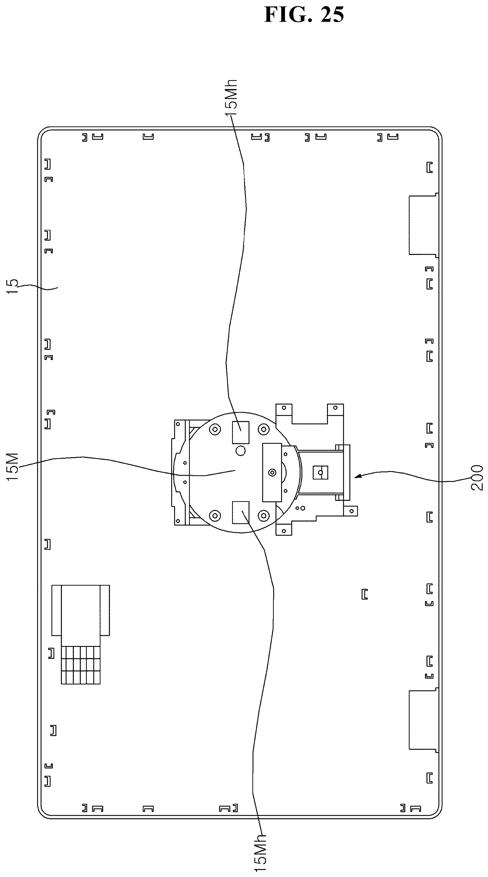

Referring to FIGS. 25 and 26, the back cover 15 may be an overall square plate. The mount 15M of the back cover 15 may be positioned at the center of the back cover 15. The mount 15M of the back cover 15 may form a low step from the outside to the inside of the back cover 15. The mount 15M of the back cover 15 may have a circular side wall.

The hook hole 15Hh may be formed on the side wall of the back cover mount 15M. There may be a plurality of hook holes 15Hh. For example, the hook hole 15Hh may be a pair. A button hole 15Bh may be positioned between the pair of hook holes 15Hh. The button hole 15Bh may be formed on the back cover 15 while being adjacent to the mount 15M. A magnet mount 15a may be formed on the mount 15M at between the hook holes 15Hh.

The connector coupler 200 may be coupled or fixed to the inner surface of the back cover 15. The connector coupler 200 may be adjacent to the hook hole 15Hh, and may cover the button hole 15Bh.

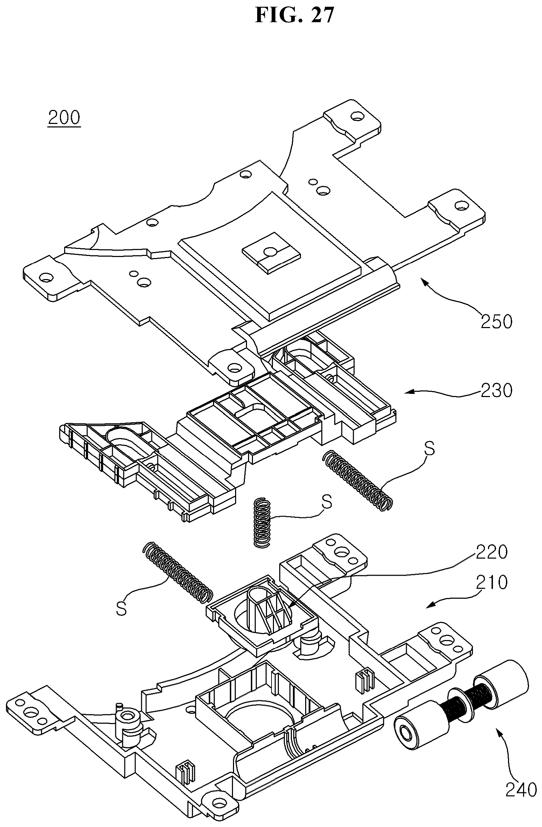

Referring to FIG. 27 together with FIG. 26, the connector coupler 200 may include a coupler base 210. The coupler base 210 may be coupled or fixed to the inner surface of the back cover 15. The connector coupler 200 may include a button 220. The button 220 may be mounted on the coupler base 210. The button 220 may move reciprocally in the thickness direction of the coupler base 210. The elastic member S may support the button 220. The elastic member S may provide elastic force in the direction in which the button 220 moves reciprocally.

The connector coupler 200 may include a sliding body 230. The sliding body 230 may be coupled to the coupler base 210. The sliding body 230 may be coupled to the button 220 and may move reciprocally in one direction on the coupler base 210. The direction of movement of the sliding body 230 may intersect with the direction of movement of the button 220. For example, the sliding body 230 may move in a direction from the upper long side of the display head 10 (see FIG. 1) toward the lower long side. The elastic member S may provide elastic force in the direction of movement of the sliding body 230.

The connector coupler 200 may include a weight assembly 240. The weight assembly 240 may be coupled to the coupler base 210 while being adjacent to the button 220. The weight assembly 240 may be replaced with a gravity sensor. The connector coupler 200 may include a coupler cover 250. The coupler cover 250 may be coupled with the coupler base 210. The coupler cover 250 may cover the sliding body 230 and/or the button 220.

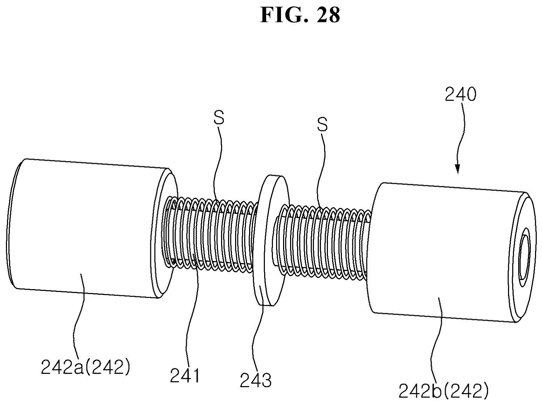

Referring to FIG. 28, the weight assembly 240 may include a moving shaft 241, a weight 242, a washer 243, and/or an elastic member S. The moving shaft 241 may be a long pole. The weight 242 may be fixed to both ends of the moving shaft 241. There may be a pair of weights 242, and each of the pair of weights 242 may be fixed to both ends of the moving shaft 241. The pair of weights 242 may have the same weight.

The elastic member S may be coupled to the moving shaft 241. The elastic member S may provide elastic force to the weight 242. For example, the elastic member S may be a coil spring. The washer 243 may be set at the center of the moving shaft 241. The washer 243 may slide and move on the moving shaft 241. The elastic member S may be a pair of coil springs. Each of the pair of coil springs S may be positioned between one 242a of the pair of weights 242 and the washer 243, and between the other 242b of the pair of weights 242 and the washer 243.

Accordingly, when the moving shaft 241 pivots around the washer 243, the washer 243 may reciprocally move between the pair of weights 242 while receiving elastic force from the elastic members S.

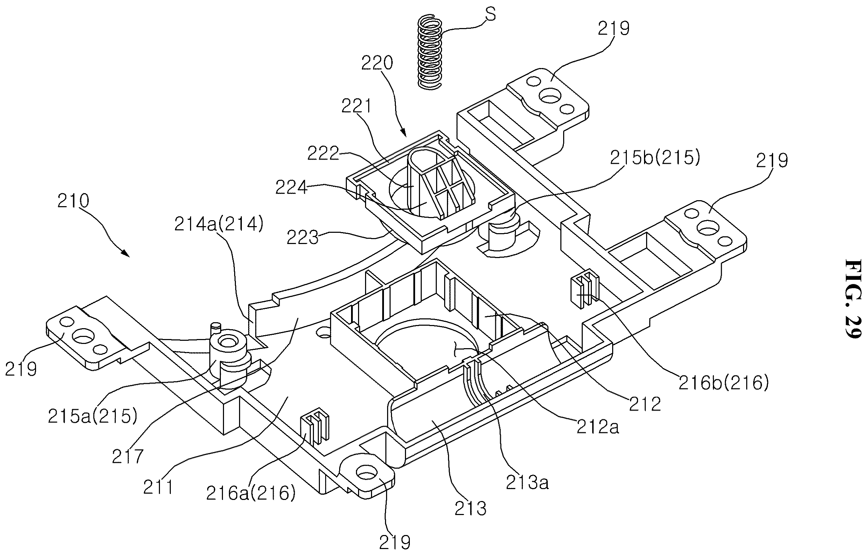

Referring to FIG. 29, the coupler base 210 may have a button 220 mounted thereon. The button 220 mounted on the coupler base 210 may reciprocally move in the thickness direction of the coupler base 210.

A body supporter 211 may form a flat plate of the coupler base 210. A button hole 212a may penetrate the body supporter 211. A button housing 212 may form a wall with respect to the body supporter 211 around the button hole 212a. A weight housing 213 may be positioned on one side of the button housing 212.

The body supporter 211 may include a curved wall 217 corresponding to the side wall of the mount 15M (see FIG. 26) of the back cover 15 (see FIG. 26). The curved wall 217 may be positioned opposite to the weight housing 213 with respect to the button housing 212. A hook gate 214 may be formed in the curved wall 217. There may be a plurality of hook gates 214. A pair of hook gates 214 may be formed in the curved wall 217 on both sides of the button housing 212.

A coupler coupling portion 219 may be positioned on one side or both sides of the body supporter 211. The coupler coupling portion 219 may be fixed to the inner surface of the back cover 15 (see FIG. 26). A guide boss 215 may be formed on the body supporter 211 in correspondence with the position of the hook gate 214. A spring supporter 216 may be formed on the body supporter 211 while being positioned opposite to the hook gate 214 with respect to the guide boss 215.

The button 220 may include a button frame 221, a button column 222, and a contact portion 223. The button frame 221 may correspond to the button housing 212 and may be inserted into the button housing 212. The contact portion 223 may be inserted into the button hole 212a. The contact portion 223 may form one side of the button housing 212. The button column 222 may be positioned opposite to the contact portion 223 with respect to the button housing 212. The button column 222 may include an inclined portion 224. The inclined portion 224 may be adjacent to the weight housing 213. An elastic member S may be inserted into the button column 222.

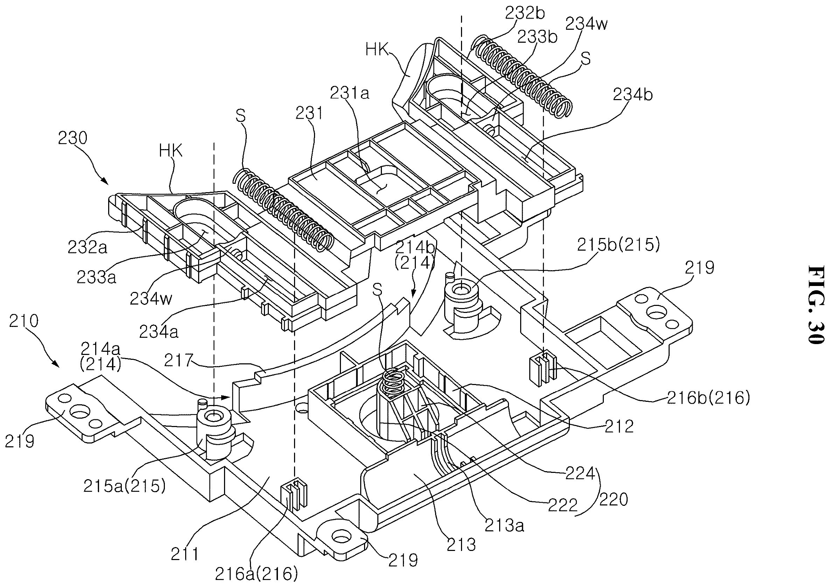

Referring to FIG. 30, the sliding body 230 may be mounted on the coupler base 210, and may reciprocally move on the coupler base 210. A center plate 231 may cover the body supporter 211. A column hole 231a may penetrate the center plate 231. The column 222 of the button 220 may be inserted into the column hole 231a. The column hole 231a may have a size that allows all of the button column 222 to be inserted.

A first wing 232a and/or a second wing 232b may form both sides of the center plate 231. The first wing 232a may be positioned opposite to the second wing 232b with respect to the column hole 231a. The wing 232a, 232b may include a boss slot 233a, 233b and a supporter slot 234a, 234b. The boss slot 233a, 233b may form a series with the supporter slot 234a, 234b. The guide boss 215 may be inserted into the boss slot 233a, 233b, and the spring supporter 216 may be inserted into the supporter slot 234a, 234b. The hook HK may be positioned opposite to the supporter slot 234a, 234b with respect to the boss slot 233a, 233b. The hook HK may be positioned in the hook gate 214. When the sliding body 230 reciprocates on the coupler base 210, the hook HK may reciprocate through the hook gate 214.

The elastic member S may be inserted into the supporter slot 234a, 234b. One end of the elastic member S may be supported by the spring supporter 216, and the other end of the elastic member S may be supported by the slot wall 234w forming one side of the supporter slot 234a, 234b. The elastic member S may push the sliding body 230 toward the hook gate 214.

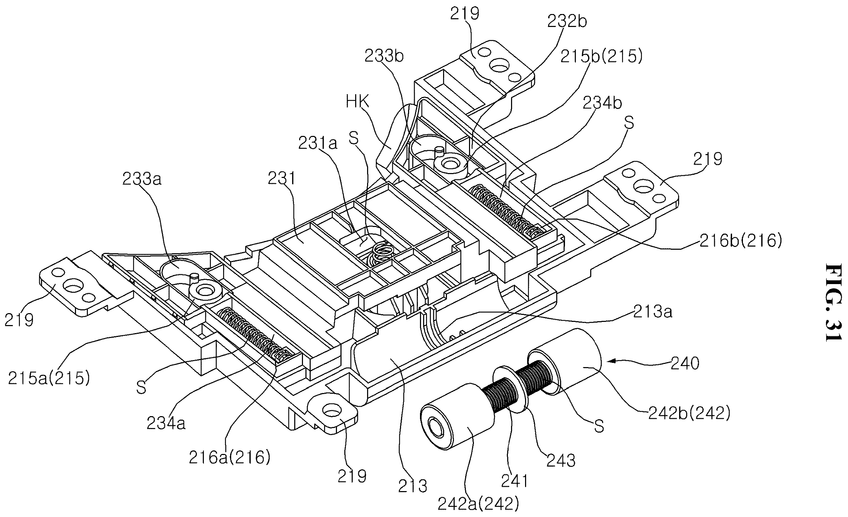

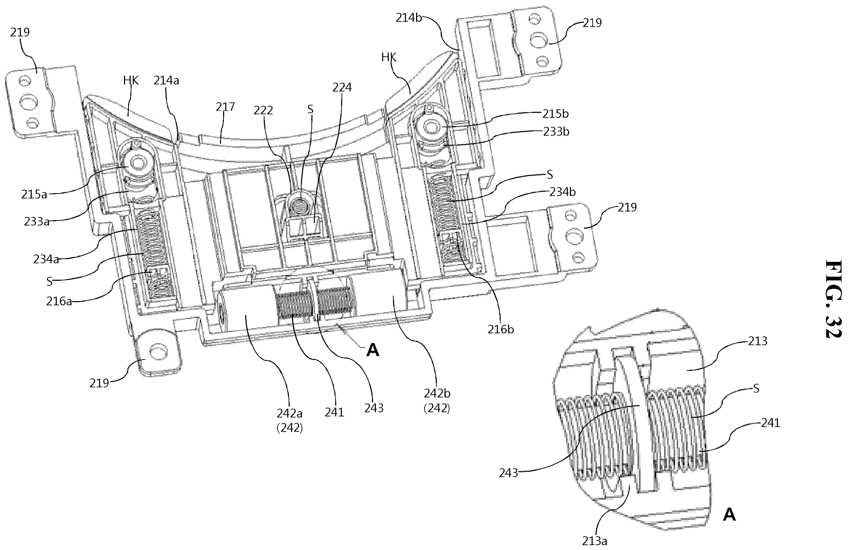

Referring to FIGS. 31 and 32, the weight assembly 240 may be coupled to the weight housing 213. The weight housing 213 may include a washer slot 213a. For example, the weight housing 213 may have an overall pipe shape or a half-pipe shape, and the washer slot 213a may be positioned in the middle of the weight housing 213. The washer slot 213a may be a pair of rings.

The washer 243 may be inserted into the washer slot 213a. The washer 243 may be fixedly positioned in the washer slot 213a, and the weights 242 and the moving shaft 241 may move around the washer 243. The elastic member S may provide elasticity to the weight 242 moving on the moving shaft 241 to assist in restoring the position of the weight 242.

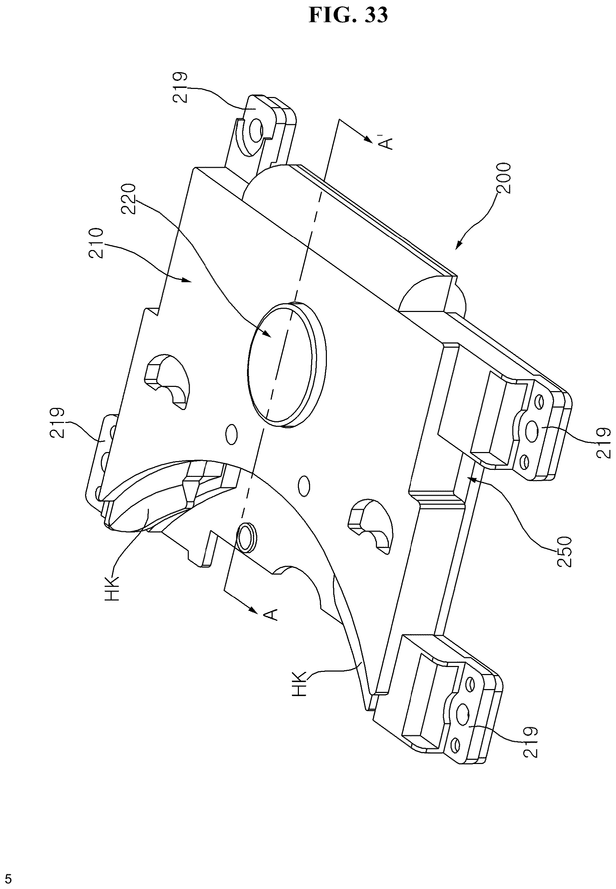

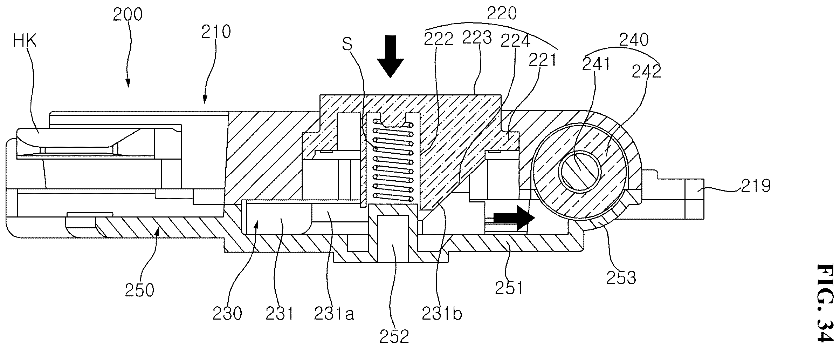

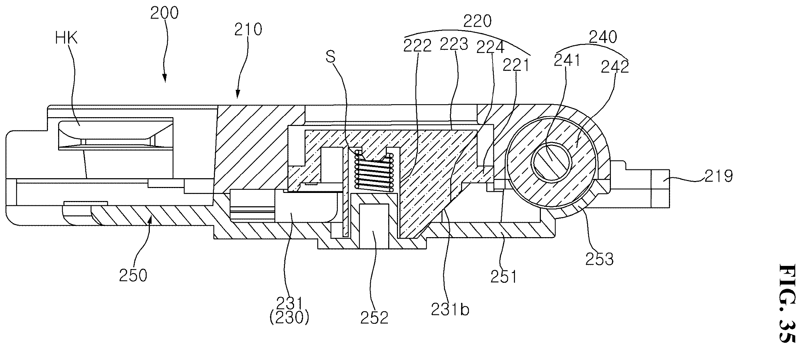

FIG. 34 and FIG. 35 show an example of a cross-sectional view taken along line A-A' of FIG. 33.

Referring to FIG. 33 to FIG. 35, the coupler cover 250 may include a main cover 251, a housing cover 253, and/or a button guide 252. The main cover 251 may face the coupler base 210. The housing cover 253 may be coupled with the weight housing 213 (see FIG. 30) to cover or guide the weight assembly 240. The button guide 252 may be formed on the main cover 251 of the coupler cover 250 and may extend toward the button 220. The button guide 252 may be inserted into the inside of the button column 222. The elastic member S may be inserted into the inside of the button column 222 and supported by the button guide 252. The elastic member S may provide elastic force to the button 220 from the button guide 252.

When the button 220 is pressed by an external force, the button 220 may move from the coupler base 210 toward the coupler cover 250. As the button 220 moves, it may be inserted into the column hole 231a of the center plate 231 of the sliding body 230. The column hole 231a of the sliding body 230 may have an inclined portion 231b. The inclined portion 231b of the sliding body 230 may come into contact with the inclined portion 224 of the button 220. The sliding body 230 may be moved as the inclined portion 224 of the button 220 rubs against the inclined portion 231b of the sliding body 230. When the external force is removed from the button 220, the button 220 may be restored by the elastic force provided by the elastic member S.

Accordingly, the hook HK may reciprocally move from the inside to the outside of the connector coupler 200 through the hook gate 214 (see FIG. 30) of the connector coupler 200.

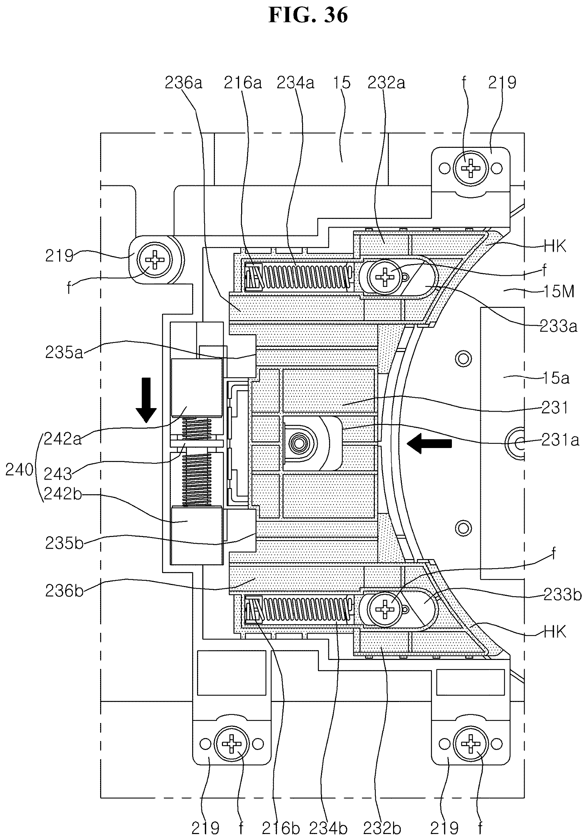

Referring to FIGS. 36 to 39, the first wing 232a and/or the second wing 232b of the sliding body 230 may include a wing stopper 236a, 236b that protrudes and extends from the edge of the center plate 231. The wing stopper 236a, 236b may be referred to as a wing end 236a, 236b. The edge of the center plate 231 may be adjacent to the weight housing 213 (see FIG. 31) or may be an edge facing the weight housing 213 (see FIG. 31). There may be a plurality of wing stoppers 236a, 236b. The first wing stopper 236a may protrude and extend from the first wing 232a, and the second wing stopper 236b may protrude and extend from the second wing 232b. A weight receiving portion 235a, 235b may be formed between the wing stopper 236a, 236b. The weight receiving portions 235a, 235b may form the edge of the center plate 231. A first weight receiving portion 235a may be adjacent to the first wing stopper 236a, and a second weight receiving portion 235b may be adjacent to the second wing stopper 236b.

The wing stopper 236a, 236b may be caught by the weight 242a, 242b or may not come into contact with the weight 242a, 242b, depending on the position of the weight 242a, 242b. For example, when a pair of weights 242a, 242b move toward the first wing 232a with respect to the washer 243, the first wing stopper 236a may be engaged with the weight 242a. Accordingly, the movement of the sliding body 230 may be restricted. For another example, when a pair of weights 242a, 242b move toward the second wing 232b with respect to the washer 243, the second wing stopper 236b may be engaged with the weight 242b. Accordingly, the movement of the sliding body 230 may be restricted. For another example, if the washer 243 is positioned at the center between the pair of weights 242a, 242b by the elastic member S, the first wing stopper 236a and the second wing stopper 236b may not come into contact with any one of the pair of weights 242a, 242b. Accordingly, the sliding body 230 may move.

Referring to FIG. 2 together, due to the operation of the connector coupler 200, when the display head 10 is in landscape mode, the connector 40 may be separated from the display head 10. Due to the operation of the connector coupler 200, when the display head 10 is in portrait mode, the connector 40 may not be separated from the display head 10.

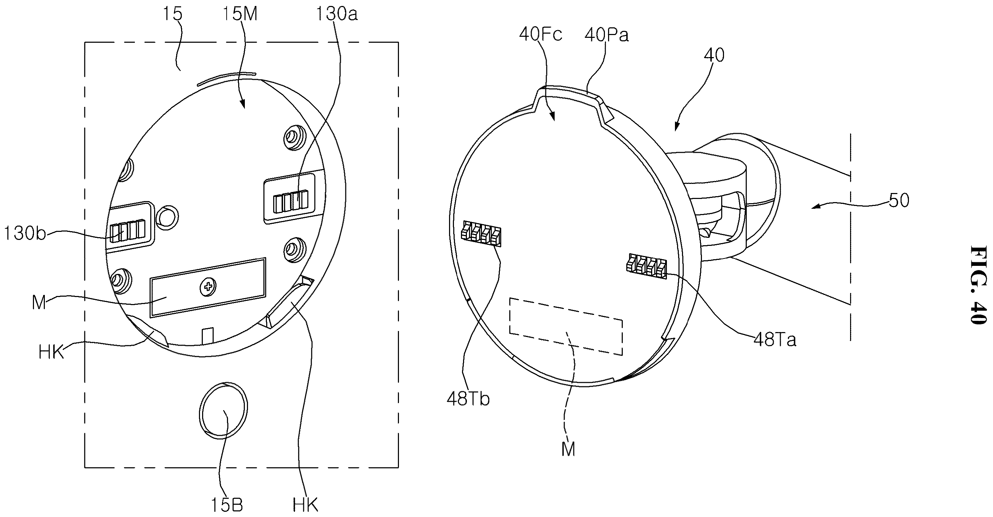

Referring to FIG. 40, the head magnet M may be coupled to the magnet mount 15a (see FIG. 26) of the back cover 15. The connector magnet M may be coupled to the inside of a front cover 40Fc of the connector 40. The connector magnet M may be coupled to the front bracket 41 (see FIG. 13).

When the connector 40 is coupled to the mount 15M of the back cover 15, an attractive force may be applied to the head magnet M and the connector magnet M. Accordingly, an auxiliary coupling force may be provided in the process of coupling the connector 40 to the display head 10 (see FIG. 2).

Referring to FIGS. 1 to 40, the display device includes: a display which displays an image on a front surface; a connector which is positioned at a rear of the display, and to which the display is rotatably coupled; an arm to which the connector is coupled; a pole which is elongated, and to which the arm is coupled; and a base which supports the pole, in which the display device includes a connector coupler which adjusts the display to be selectively separated from the connector according to rotation of the display.

The connector coupler includes a gravity sensor.

The display includes: a display panel which displays the image; a frame which is coupled with the display panel at a rear of the display panel; and a back cover which covers the frame, in which the back cover includes: a mount which provides a position where the connector is coupled; and a hook hole which is formed by penetrating the back cover around the mount, in which the connector coupler includes a hook which is positioned between the back cover and the frame, reciprocates through the hook hole, and is engaged with the connector.

The back cover includes a fixing hole which is spaced apart from the hook hole around the mount, and is formed in the back cover, and the connector has one side which is inserted into the fixing hole, and has the other side to which the hook is inserted and which is fixed to the back cover.

The connector includes: a front cover which faces the mount of the back cover; a rear cover which is coupled with the front cover; and a front bracket which is positioned between the front cover and the rear cover, in which the front bracket includes a coupling portion which protrudes toward a boundary of the front cover and the rear cover, and is inserted into the fixing hole of the mount of the back cover.

The connector includes a protrusion which protrudes from at least one of the rear cover and the front cover, corresponds to the coupling portion of the front bracket, and is inserted into the fixing hole of the mount of the back cover.

The connector includes a slot which is formed in at least one of the rear cover and the front cover, and into which the hook is inserted.

The connector coupler includes: a coupler base which is positioned adjacent to the hook hole, around the mount of the back cover; a coupler cover which is coupled with the coupler base; and a sliding body which is positioned between the coupler base and the coupler cover, and reciprocates with respect to the coupler base, and the hook is formed at one end of the sliding body.

At least one of the coupler base or the coupler cover includes a hook gate aligned with a hook hole formed in the mount of the back cover, and the hook of the sliding body reciprocates between the inside and the outside of the back cover through the hook gate of the connector coupler and the hook hole of the back cover.

The coupler base includes: a body supporter which faces the sliding body; a button hole which is formed by penetrating the body supporter; and a button housing which is formed around the button hole, and the connector coupler includes a button which is mounted in the button housing and exposed through the button hole.

The button includes: a contact portion which is positioned in the button hole; a button frame in which the contact portion is formed; and a button column which is positioned opposite to the contact portion with respect to the button frame, and the sliding body includes a column hole into which the button column is inserted.

The button includes an inclined portion formed in the button column, and the column hole of the sliding body is in contact with the inclined portion of the button, so that when the button moves, the sliding body slides with respect to the coupler base.

The sliding body includes an inclined portion which is formed in the column hole, and is in contact with the inclined portion of the button.

The coupler base or the coupler cover includes a weight housing which is adjacent to the sliding body. The sliding body includes: a center plate which faces the coupler base; a first wing which is formed on one side of the center plate; and a second wing which is formed on the other side of the center plate positioned opposite to the first wing with respect to the center plate. The hook includes: a first hook formed on one side of the first wing; and a second hook formed on one side of the second wing. The center plate includes a weight receiving portion which is formed between the other side of the first wing and the other side of the second wing, and accommodates the weight housing when the sliding body is directed toward the weight housing.

The sliding body includes: a first wing stopper which is formed on the other side of the first wing; and a second wing stopper which is formed on the other side of the second wing, and the weight receiving portion is positioned between the first wing stopper and the second wing stopper.

The connector coupler includes: a moving shaft which extends from the first wing stopper toward the second wing stopper in the weight housing; a pair of weights which are fixed to both ends of the moving shaft; and a washer into which the moving shaft is inserted, and which is positioned between the pair of weights, in which the washer is fixed to the weight housing, so that the pair of weights and the moving shaft reciprocate in a length direction of the moving shaft in the weight housing according to a rotation of the display.

The pair of weights is positioned in the weight receiving portion or blocks any one of the first wing stopper and the second wing stopper, according to the rotation of the display.

The display includes a first magnet fixed to the mount of the back cover, and the connector includes a second magnet fixed to the front cover or the front bracket, so that when the connector is adjacent to the mount of the back cover, the first magnet is coupled to the second magnet.

The mount of the back cover includes a side wall by forming a low step from a rear surface of the back cover, and the hook hole is formed on the side wall of the mount of the back cover.

The mount of the back cover is fixed to the frame by a fastening member.

The effects of the bracket assembly and the display device including the same according to the present disclosure are described as follows.

According to at least one of the embodiments of the present disclosure, a display device having a stand for supporting a display can be provided.

According to at least one of the embodiments of the present disclosure, a display device capable of freely adjusting the angle or height of a display can be provided.

According to at least one of the embodiments of the present disclosure, a display device capable of improving durability for freely adjusting the angle or height of a display and repeated operations can be provided.

According to at least one of the embodiments of the present disclosure, a display device capable of attaching a display to a stand or detaching the display from the stand can be provided.

According to at least one of the embodiments of the present disclosure, a connection structure between a display and a stand can be provided.

According to at least one of the embodiments of the present disclosure, a mechanism for selectively coupling a display and a stand can be provided.

According to at least one of the embodiments of the present disclosure, a mechanism that restrains the separation of a display from a stand in response to rotation of the display can be provided.

According to at least one of the embodiments of the present disclosure, a mechanism that prevents a display from falling while separating the display from a stand can be provided.

Certain embodiments or other embodiments of the invention described above are not mutually exclusive or distinct from each other. Any or all elements of the embodiments of the invention described above can be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display which displays an image on a front surface;
a connector which is positioned at a rear of the display, and to which the display is rotatably coupled;
an arm to which the connector is coupled;
a pole which is elongated, and to which the arm is coupled; and
a base which supports the pole,
wherein the display device comprises a connector coupler which adjusts the display to be selectively separated from the connector according to rotation of the display.

2. The display device of claim 1, wherein the connector coupler comprises a gravity sensor.

3. The display device of claim 1, wherein the display comprises:
a display panel which displays the image;
a frame which is coupled with the display panel at a rear of the display panel; and
a back cover which covers the frame,
wherein the back cover comprises:
a mount which provides a position where the connector is coupled; and
a hook hole which is formed by penetrating the back cover around the mount,
wherein the connector coupler comprises a hook which is positioned between the back cover and the frame, reciprocates through the hook hole, and is engaged with the connector.

4. The display device of claim 3, wherein the back cover comprises a fixing hole which is spaced apart from the hook hole around the mount, and is formed in the back cover,
wherein the connector has one side which is inserted into the fixing hole, and has the other side to which the hook is inserted and which is fixed to the back cover.

5. The display device of claim 4, wherein the connector comprises:
a front cover which faces the mount of the back cover;
a rear cover which is coupled with the front cover; and
a front bracket which is positioned between the front cover and the rear cover,
wherein the front bracket comprises a coupling portion which protrudes toward a boundary of the front cover and the rear cover, and is inserted into the fixing hole of the mount of the back cover.

6. The display device of claim 5, wherein the connector comprises a protrusion which protrudes from at least one of the rear cover and the front cover, corresponds to the coupling portion of the front bracket, and is inserted into the fixing hole of the mount of the back cover.

7. The display device of claim 6, wherein the connector comprises a slot which is formed in at least one of the rear cover and the front cover, and into which the hook is inserted.

8. The display device of claim 3, wherein the connector coupler comprises:
a coupler base which is positioned adjacent to the hook hole, around the mount of the back cover;
a coupler cover which is coupled with the coupler base; and
a sliding body which is positioned between the coupler base and the coupler cover, and reciprocates with respect to the coupler base,
wherein the hook is formed at one end of the sliding body.

9. The display device of claim 8, wherein at least one of the coupler base or the coupler cover comprises a hook gate aligned with a hook hole formed in the mount of the back cover,
wherein the hook of the sliding body reciprocates between the inside and the outside of the back cover through the hook gate of the connector coupler and the hook hole of the back cover.

10. The display device of claim 8, wherein the coupler base comprises:
a body supporter which faces the sliding body;
a button hole which is formed by penetrating the body supporter; and
a button housing which is formed around the button hole,
wherein the connector coupler comprises a button which is mounted in the button housing and exposed through the button hole.

11. The display device of claim 10, wherein the button comprises:
a contact portion which is positioned in the button hole;
a button frame in which the contact portion is formed; and
a button column which is positioned opposite to the contact portion with respect to the button frame,
wherein the sliding body comprises a column hole into which the button column is inserted.

12. The display device of claim 11, wherein the button comprises an inclined portion formed in the button column,
wherein the column hole of the sliding body is in contact with the inclined portion of the button, so that when the button moves, the sliding body slides with respect to the coupler base.

13. The display device of claim 12, wherein the sliding body comprises an inclined portion which is formed in the column hole, and is in contact with the inclined portion of the button.

14. The display device of claim 8, wherein the coupler base or the coupler cover comprises a weight housing which is adjacent to the sliding body,
wherein the sliding body comprises:
a center plate which faces the coupler base;
a first wing which is formed on one side of the center plate; and
a second wing which is formed on the other side of the center plate positioned opposite to the first wing with respect to the center plate,
wherein the hook comprises:
a first hook formed on one side of the first wing; and
a second hook formed on one side of the second wing,
wherein the center plate comprises a weight receiving portion which is formed between the other side of the first wing and the other side of the second wing, and accommodates the weight housing when the sliding body is directed toward the weight housing.

15. The display device of claim 14, wherein the sliding body comprises:
a first wing stopper which is formed on the other side of the first wing; and
a second wing stopper which is formed on the other side of the second wing,
wherein the weight receiving portion is positioned between the first wing stopper and the second wing stopper.

16. The display device of claim 15, wherein the connector coupler comprises:
a moving shaft which extends from the first wing stopper toward the second wing stopper in the weight housing;
a pair of weights which are fixed to both ends of the moving shaft; and
a washer into which the moving shaft is inserted, and which is positioned between the pair of weights,
wherein the washer is fixed to the weight housing, so that the pair of weights and the moving shaft reciprocate in a length direction of the moving shaft in the weight housing according to a rotation of the display.

17. The display device of claim 16, wherein the pair of weights is positioned in the weight receiving portion or blocks any one of the first wing stopper and the second wing stopper, according to the rotation of the display.

18. The display device of claim 5, wherein the display comprises a first magnet fixed to the mount of the back cover,
wherein the connector comprises a second magnet fixed to the front cover or the front bracket, so that when the connector is adjacent to the mount of the back cover, the first magnet is coupled to the second magnet.

19. The display device of claim 3, wherein the mount of the back cover comprises a side wall by forming a low step from a rear surface of the back cover,
wherein the hook hole is formed on the side wall of the mount of the back cover.

20. The display device of claim 19, wherein the mount of the back cover is fixed to the frame by a fastening member.
